# EUROPEAN PATENT SPECIFICATION

(11) **EP 2 978 810 B1**
(45) Date of publication and mention of the grant of the patent: **24.02.2021**
(21) Application number: 14715196.3
(22) Date of filing: 19.03.2014
(51) Int. Cl.: C08L 77/06, C08L 77/02, C08K 7/14, C08K 5/053, C08K 3/38, C08K 3/22, C08K 9/12, C08K 3/013, C08K 5/20, C08K 3/014

(54) **HEAT RESISTANT POLYAMIDE COMPOSITIONS**
WÄRMEBESTÄNDIGE POLYAMIDZUSAMMENSETZUNGEN
COMPOSITIONS DE POLYAMIDE THERMORÉSISTANTES

(30) Priority: 25.03.2013 US 201313849809
(43) Date of publication of application: 03.02.2016
(73) Proprietor: E. I. du Pont de Nemours and Company, Wilmington, DE 19805 (US)
(72) Inventor: DUNCAN, Andrew, Jay, Wilmington, Delaware 19803 (US); MESSMORE, Benjamin, Weaver, Wilmington, Delaware 19806 (US); THOMPSON, Jennifer, Leigh, Newark, Delaware 19713 (US)
(74) Representative: Heinemann, Monica
(86) International application number: PCT/US2014/031157
(87) International publication number: WO 2014/160564

(56) References cited:
- WO-A2-2012/064965
- WO-A2-2013/033287
- JP-A- 2011 026 446
- US-A1- 2010 028 580
- US-A1- 2010 113 655

## Description

### Field of the Invention

The present invention relates to the field of polyamide compositions and articles prepared from these polyamide composition having improved high temperature aging characteristics.

### BACKGROUND

High temperature resins based on polyamides possess desirable chemical resistance, processability and heat resistance. This makes them particularly well suited for demanding high performance automotive and electrical/electronics applications. There is a current and general desire in the automotive field to have high temperature resistant polymeric structures for use in underhood areas of automobiles where temperatures higher than 15CTC, even higher than 200°C, are often reached. When plastic parts are exposed to such high temperatures for a prolonged period, such as in automotive under-the-hood applications or in electrical/electronics applications, the mechanical properties generally tend to decrease due to the thermo-oxidation of the polymer. This phenomenon is called heat aging.

In an attempt to improve heat aging characteristics of polymers, it has been the conventional practice to add heat stabilizers (also referred to as antioxidants) to thermoplastic compositions comprising polyester or polyamide resins.

US patent 5,965,652 discloses a thermally stable polyamide molding composition containing colloidal copper formed in situ. GB patent 839,067 discloses a polyamide composition comprising a copper salt and a halide of a strong organic base. US patent 7,989,526 discloses a flame retarded, reinforced, polyamide composition comprising a semi-aromatic polyamide, a flame retardant, a reinforcing agent, and zinc borate.

US 2001/0056145 and US 2010/0249292 disclose polyamide compositions comprising polyamide resin, flame retardant, glass fibers, and zinc compounds. US 2010/0069539 patent publication discloses polyamide compositions comprising a polyamide resin, a phosphorus-containing flame retarder, glass fibers having a non-circuiar cross-section, and zinc borate as a flame co-retardant.

WO 2009009360 discloses semi-aromatic polyamide compositions comprising non-halogenated flame retardants, zinc borate, and optionally one or more additional flame retardant synergists.

US 2010-0029819 A1 discloses molded or extruded thermoplastic article having high heat stability over at least 500 hours at least 170 °C including a thermoplastic resin; one or more polyhydric alcohols having more than two hydroxyl groups and a having a number average molecular weight of less than 2000; and one or more reinforcement agents.

WO2012/064965 discloses a halogen-free flame retardant thermoplastic composition including a zinc borate, flame retardant synergist and polyhydric alcohol, but absent a copper heat stabilizer.

JP 2011026446 discloses a composition comprising a polyamide resin, thermostabilizer and zinc compound.

WO2013033287 A2 describes a thermoplastic composition comprising a polyamide resin, and a polyhydric alcohol, wherein a majority of the polyhydric alcohol particles have a particle size that is less than about 70 microns.

US2010113655 A1 discloses high temperature flame retarded semiaromatic polyamides. The resin compositions include, in addition to the polyamide and flame retardant, aromatic organic acid and at least one inorganic reinforcing agent and/or filler.

US2010028580 A1 describes a molded or extruded thermoplastic article including a polyamide composition including (a) a polyamide resin (b) 0.1 to 10 weight percent of one or more polyhydric alcohols (c) 0 to 3 weight percent of a co-stabilizer selected from the group consisting of secondary aryl amines, hindered amine light stabilizers, and mixtures thereof; (d) 0 to less than 10 weight percent of one or more reinforcement agents; and (e) 0 to 50 weight percent polymeric toughener including a reactive functional group and/or a metal salt of a carboxylic acid.

However, the heat aging characteristics of existing technologies are insufficient for more demanding applications involving exposure to higher temperatures such as for example in automotive under-the-hood applications and in electrical/electronics applications.

There remains a need for low-cost polyamide compositions that are suitable for manufacturing articles and that exhibit good mechanical properties after long-term high temperature exposure.

### SUMMARY OF INVENTION

Disclosed is a polyamide composition comprising:
a) 39.9 to 89.9 weight percent of one or more polyamide resins;
b) 10 to 60 weight percent reinforcing agent;
c) 0.2 to 5 weight percent of a zinc compound selected from the group consisting of zinc carbonates, titanates, molybdates, sulfates, phosphates, oxides, borates and halides and mixtures of these ;
d) 0.05 to 1 weight percent copper heat stabilizer;
e) 0 to 5 weight percent polyhydric alcohol;
wherein the polyamide resin has a melting point of less than 280°C, as measured by differential scanning calorimetry at 10 °C/minute scan speed in the first heating scan, and is selected from the group consisting of Group (II) polyamides having a melting point of at least 210 °C selected from the group consisting of poly(tetramethylene hexanediamide), poly(ε-caprolactam), poly(hexamethylene hexanediamide/(ε-caprolactam/), poly(hexamethylene hexanediamide), poly(hexamethylene hexanediamide/hexamethylene decanediamide), poly(hexamethylene hexanediamide/hexamethylene dodecanediamide), poly(hexamethylene hexanediamide/decamethylene decanediamide), poly(hexamethylene decanediamide), poly(hexamethylene dodecanediamide), poly(hexamethylene tetradecanediamide), and poly(tetramethylene hexanediamide/2-methylpentamethylene hexanediamide); and Group (III) polyamides having a melting point of at least 230 °C, and comprising
(aa) 20 to 35 mole percent semiaromatic repeat units derived from monomers selected from one or more of the group consisting of:
   (i) aromatic dicarboxylic acids having 8 to 20 carbon atoms and aliphatic diamines having 4 to 20 carbon atoms; and
(bb) 65 to 80 mole percent aliphatic repeat units derived from monomers selected from one or more of the group consisting of:
   (ii) an aliphatic dicarboxylic acid having 6 to 20 carbon atoms and said aliphatic diamine having 4 to 20 carbon atoms; and
   (iii) a lactam and/or aminocarboxylic acid having 4 to 20 carbon atoms; and combination of these;
with the proviso that when zinc borate is the zinc compound or when zinc oxide is the zinc compound and is present at 0.65 weight percent or less, the polyamide composition comprises 0.25 to 5 weight percent polyhydric alcohol; and wherein all weight percentages are based on the total weight of the polyamide composition; and wherein the composition comprises less than 2 weight percent of a flame retardant and wherein the flame retardant is selected from the group consisting of organic halogenated flame retardant having 50 to 70 % by weight halogen selected from the group consisting of bromine and chlorine; and organic phosphinate flame retardant.

Also disclosed is a polyamide composition comprising:
a) 39.64 to 89.64 weight percent of one or more Group (IV) polyamide resins having a melting point of greater than 280 °C and comprising one or more polyamides selected from the group consisting of **Group (IV) polyamides** comprising
   (cc) 50 to 95 mole percent semiaromatic repeat units derived from monomers selected from one or more of the group consisting of:
      (i) aromatic dicarboxylic acids having 8 to 20 carbon atoms and aliphatic diamines having 4 to 20 carbon atoms; and
   (dd)5 to 50 mole percent aliphatic repeat units derived from monomers selected from one or more of the group consisting of:
      (ii) an aliphatic dicarboxylic acid having 6 to 20 carbon atoms and said aliphatic diamine having 4 to 20 carbon atoms; and
      (iii) a lactam and/or aminocarboxylic acid having 4 to 20 carbon atoms;
b) 10 to 60 weight percent reinforcing agent;
c) 0.2 to 5 weight percent of a zinc compound selected from the group consisting of zinc carbonates, titanates, molybdates, sulfates, phosphates, oxides, borates and halides and mixtures of these ;
d) 0.01 to 1 weight percent copper heat stabilizer; and
e) 0.25 to 5 weight percent polyhydric alcohol;
wherein all weight percentages are based on the total weight of the polyamide composition and wherein the composition comprises less than 2 weight percent of a flame retardant and wherein the flame retardant is selected from the group consisting of organic halogenated flame retardant having 50 to 70 % by weight halogen selected from the group consisting of bromine and chlorine; and organic phosphinate flame retardant.

Also disclosed are processes for preparing the polyamide compositions described herein and articles prepared from the afore-mentioned polyamide compositions.

### DETAILED DESCRIPTION

The claims and description herein are to be interpreted using the abbreviations and definitions set forth below:
"%" refers to the term percent.
"wt %" refers to weight percent.
"hrs" or "h" refers to hours.
"g" refers to grams.
"kg" refers to kilograms
"MPa" refers to Mega Pascals.

As used herein, the article "a" indicates one as well as more than one and does not necessarily limit its referent noun to the singular.

As used herein, the term "high-temperature" means a temperature at or higher than 230 °C.

As used herein, the term "long-term" refers to a heat aging period equal or longer than 500 hrs, preferably greater than or equal to 1000 hrs.

As used herein, the term "high tensile strength" refers to the tensile strength of a material, measured according to ISO 527-1 on 2 mm tensile bars that have been injection molded according to ISO 527-2/1A, which is at least 100 MPa.

As used herein, the term "initial tensile strength" refers to the tensile strength of test bars prepared from the polyamide compositions described herein and which have not been exposed to air oven aging. Test bars which have not been exposed to air oven aging are sometimes referred to as dry as molded test bars.

As used herein, the term "heat stability" or "desirable heat stability", as applied to the polyamide composition disclosed herein or to an article made from the composition, refers to the retention of tensile strength of 2 mm thick tensile bars that have been injection molded according to ISO 527-2/1A and consisting of the polyamide composition which are exposed to air oven aging (AOA) conditions at a test temperature of 230 °C for a test period of at least 1000 h, in an atmosphere of air, and then tested according to ISO 527-2/1 BA method. Tensile strength of the air oven aged test bars are compared to that of test bars which have identical composition and shape and which have not been air oven aged. The resulting values are expressed in terms of "% retention".

The terms "retention of tensile strength" or "tensile strength retention" refers to the percentage of initial tensile strength retained of 2 mm thick tensile bars that have been injection molded according to ISO 527-2/1A and which have been heat aged at 230 °C for 1000 hrs. Values below 100% indicate a tensile strength, after heat aging, which is less than the initial tensile strength. Values above 100% indicate a tensile strength, after heat aging, that is greater than the initial tensile strength.

The term "at 230 °C" refers to the nominal temperature of the environment to which the test bars are exposed; with the understanding that the actual temperature may vary by +/- 2 °C from the nominal test temperature.

The polyamide resin useful in the present invention has a melting point and/or glass transition. Herein melting points and glass transitions are as determined with differential scanning calorimetry (DSC) at a scan rate of 10 °C/min in the first heating scan, wherein the melting point is taken at the maximum of the endothermic peak and the glass transition, if evident, is considered the mid-point of the change in heat flow in Watts/gram.

The disclosure herein of any variation in terms of materials, methods, steps, values, and/or ranges of the processes, compositions and articles described herein specifically intends to include any possible combination of materials, methods, steps, values, and/or ranges. For the purpose of providing sufficient support for the claims, any disclosed combination is a preferred variant of the processes, compositions, and articles described herein.

Described herein are polyamide compositions that impart to articles made of them a desirable heat stability at 230 °C while simultaneously having a heat aged tensile strength of at least 100 MPa such that these articles can be used in high temperature applications for extended time periods.

The polyamide compositions described herein include a polyamide resin and reinforcing agent, a zinc compound, a copper heat stabilizer, and depending on the zinc compound used and the concentration of zinc compound in the polyamide composition, a polyhydric alcohol. It is the specific combination of these claimed elements within a specific concentration range, a heretofore undisclosed, unknown, and not suggested combination, that create a synergistic effect and provides polyamide compositions that simultaneously exhibit a 66% retention of tensile strength after heat aging at 230 °C for 1000 h and a heat aged tensile strength of at least 100 MPa.

One embodiment is a polyamide composition comprising:
a) 39.9 to 89.9 weight percent, or more specifically 39.89 to 89.89 weight percent, of one or more polyamide resins;
b) 10 to 60 weight percent reinforcing agent;
c) 0.2 to 5 weight percent of a zinc compound selected from the group consisting of
   zinc carbonates, titanates, molybdates, sulfates, phosphates, oxides, borates and halides and mixtures of these ;
d) 0.05 to 1 weight percent copper heat stabilizer;
e) 0 to 5 weight percent polyhydric alcohol;
wherein the polyamide resin has a melting point of less than 280°C, as measured by differential scanning calorimetry at 10 °C/minute scan speed in the first heating scan, and is selected from the group consisting of **Group (II) polyamides** having a melting point of at least 210 °C selected from the group consisting of poly(tetramethylene hexanediamide), poly(ε-caprolactam), poly(hexamethylene hexanediamide/(ε-caprolactam/), poly(hexamethylene hexanediamide), poly(hexamethylene hexanediamide/hexamethylene decanediamide), poly(hexamethylene hexanediamide/hexamethylene dodecanediamide), poly(hexamethylene hexanediamide/decamethylene decanediamide), poly(hexamethylene decanediamide), poly(hexamethylene dodecanediamide), poly(hexamethylene tetradecanediamide), and poly(tetramethylene hexanediamide/2-methylpentamethylene hexanediamide); and **Group (III) polyamides** having a melting point of at least 230 °C, and comprising
(aa) 20 to 35 mole percent semiaromatic repeat units derived from monomers selected from one or more of the group consisting of:
   (i) aromatic dicarboxylic acids having 8 to 20 carbon atoms and aliphatic diamines having 4 to 20 carbon atoms; and
(bb) 65 to 80 mole percent aliphatic repeat units derived from monomers selected from one or more of the group consisting of:
   (ii) an aliphatic dicarboxylic acid having 6 to 20 carbon atoms and said aliphatic diamine having 4 to 20 carbon atoms; and
   (iii) a lactam and/or aminocarboxylic acid having 4 to 20 carbon atoms; and combination of these;
with the proviso that when zinc borate is the zinc compound or when zinc oxide is the zinc compound and is present at 0.65 weight percent or less, the polyamide composition comprises 0.25 to 5 weight percent polyhydric alcohol; and wherein all weight percentages are based on the total weight of the polyamide composition; and wherein the composition comprises less than 2 weight percent of a flame retardant and wherein the flame retardant is selected from the group consisting of organic halogenated flame retardant having 50 to 70 % by weight halogen selected from the group consisting of bromine and chlorine; and organic phosphinate flame retardant.

Another embodiment is polyamide composition comprising:
a) 39.64 to 89.64 of one or more Group (IV) polyamide resins having a melting point of greater than 280 °C and comprising one or more polyamides selected from the group consisting of **Group (IV) polyamides** comprising
   (cc) 50 to 95 mole percent semiaromatic repeat units derived from monomers selected from one or more of the group consisting of:
      (iv) aromatic dicarboxylic acids having 8 to 20 carbon atoms and aliphatic diamines having 4 to 20 carbon atoms; and
   (ee) 5 to 50 mole percent aliphatic repeat units derived from monomers selected from one or more of the group consisting of:
      (v) an aliphatic dicarboxylic acid having 6 to 20 carbon atoms and said aliphatic diamine having 4 to 20 carbon atoms; and
      (vi) a lactam and/or aminocarboxylic acid having 4 to 20 carbon atoms;
b) 10 to 60 weight percent reinforcing agent;
c) 0.02 to 5 weight percent of a zinc compound selected from the group consisting of zinc carbonates, titanates, molybdates, sulfates, phosphates, oxides, borates and halides and mixtures of these ;
d) 0.01 to 1 weight percent copper heat stabilizer; and
e) 0.25 to 5 weight percent polyhydric alcohol;
wherein all weight percentages are based on the total weight of the polyamide composition;
and wherein the composition comprises less than 2 weight percent of a flame retardant and wherein the flame retardant is selected from the group consisting of organic halogenated flame retardant having 50 to 70 % by weight halogen selected from the group consisting of bromine and chlorine; and organic phosphinate flame retardant.

A further embodiment is a polyamide composition comprising:
a) 49.25 to 79.25 weight percent of poly(hexamethylene hexanediamide) (PA 66);
b) 20 to 50 weight percent reinforcing agent where said reinforcing agent is glass fiber;
c) 0.2 to 2.0 weight percent zinc compound wherein said zinc compound is zinc borate;
d) 0.05 to 1.0 weight percent copper heat stabilizer;
e) 0.5 to 3 weight percent polyhydric alcohol wherein said polyhydric alcohol is dipentaerythritol.

In other embodiments the polyamide compositions consists essentially of components a), b), c), d) and e) as disclosed above. That is, other components may be present in the composition, so long as they do not affect the basic and novel charateristics of the compositions and articles made therefrom which include a 66% retention of tensile strength after heat aging at 230 °C for 1000 h and a heat aged tensile strength of at least 100 MPa.

Also described herein are articles that may be formed from any variation of these polyamide compositions. Moreover, the articles described herein may be made in the form of an automotive part or engine part or electrical/electronic part. The articles disclosed herein may have application in many vehicular components that meet one or more of the following requirements: high impact requirements; significant weight reduction (over conventional metals, for instance); resistance to high temperature; resistance to oil environment; resistance to chemical agents such as coolants; and noise reduction allowing more compact and integrated design.

The polyamide resins useful in the compositions described herein are condensation products of one or more dicarboxylic acids and one or more diamines, and/or one or more aminocarboxylic acids, and/or ring-opening polymerization products of one or more cyclic lactams. Suitable cyclic lactams are caprolactam and laurolactam. Polyamides may be fully aliphatic or semi-aromatic.

Fully aliphatic polyamides are formed from aliphatic and alicyclic monomers such as diamines, dicarboxylic acids, lactams, aminocarboxylic acids, and their reactive equivalents. A suitable aminocarboxylic acid is 11-aminododecanoic acid. Suitable lactams are caprolactam and laurolactam. In the context of this invention, the term "fully aliphatic polyamide" also refers to copolymers derived from two or more such monomers and blends of two or more fully aliphatic polyamides. Linear, branched, and cyclic monomers may be used.

Carboxylic acid monomers comprised in the fully aliphatic polyamides include, but are not limited to aliphatic carboxylic acids, such as for example adipic acid (C6), pimelic acid (C7), suberic acid (C8), azelaic acid (C9), decanedioic acid (C10), dodecanedioic acid (C12), tridecanedioic acid (C13), tetradecanedioic acid (C14), pentadecanedioic acid (C15), hexadecanedioic acid (C16) and octadecanedioic acid (C18). Diamines can be chosen among diamines having four or more carbon atoms, including, but not limited to tetramethylene diamine, hexamethylene diamine, octamethylene diamine, decamethylene diamine, dodecamethylene diamine, 2-methylpentamethylene diamine, 2-ethyltetramethylene diamine, 2-methyloctamethylenediamine; trimethylhexamethylenediamine, meta-xylylene diamine, and/or mixtures thereof.

The semi-aromatic polyamide is a homopolymer, a copolymer, a terpolymer or more advanced polymers formed from monomers containing aromatic groups. One or more aromatic carboxylic acids may be terephthalate or a mixture of terephthalate with one or more other carboxylic acids, such as isophthalic acid, phthalic acid, 2-methyl terephthalic acid and naphthalic acid. In addition, the one or more aromatic carboxylic acids may be mixed with one or more aliphatic dicarboxylic acids, as disclosed above. Alternatively, an aromatic diamine such as meta-xylylene diamine (MXD) can be used to provide a semi-aromatic polyamide, an example of which is MXD6, a homopolymer comprising MXD and adipic acid.

Preferred polyamides disclosed herein are homopolymers or copolymers wherein the term copolymer refers to polyamides that have two or more amide and/or diamide molecular repeat units. The homopolymers and copolymers are identified by their respective repeat units. For copolymers disclosed herein, the repeat units are listed in decreasing order of mole % repeat units present in the copolymer. The following list exemplifies the abbreviations used to identify monomers and repeat units in the homopolymer and copolymer polyamides (PA):
- HMD: hexamethylene diamine (or 6 when used in combination with a diacid)
- T: Terephthalic acid
- AA: Adipic acid
- DMD: Decamethylenediamine
- 6: €-Caprolactam
- DDA: Decanedioic acid
- DDDA: Dodecanedioic acid
- TDDA: Tetradecanedioic acid
- HDDA: Hexadecanedioic acid
- ODDA: Octadecanedioic acid
- I: Isophthalic acid
- MXD: meta-xylylene diamine
- TMD: 1,4-tetramethylene diamine
- 4T: polymer repeat unit formed from TMD and T
- 6T: polymer repeat unit formed from HMD and T
- DT: polymer repeat unit formed from 2-MPMD and T
- MXD6: polymer repeat unit formed from MXD and AA
- 66: polymer repeat unit formed from HMD and AA
- 10T: polymer repeat unit formed from DMD and T
- 410: polymer repeat unit formed from TMD and DDA
- 510: polymer repeat unit formed from 1,5-pentanediamine and DDA
- 610: polymer repeat unit formed from HMD and DDA
- 612: polymer repeat unit formed from HMD and DDDA
- 614: polymer repeat unit formed from HMD and TDDA
- 616: polymer repeat unit formed from HMD and HDDA
- 618: polymer repeat unit formed from HMD and ODDA
- 6: polymer repeat unit formed from €-caprolactam
- 11: polymer repeat unit formed from 11-aminoundecanoic acid
- 12: polymer repeat unit formed from 12-aminododecanoic acid

Note that in the art the term "6" when used alone designates a polymer repeat unit formed from €-caprolactam. Alternatively "6" when used in combination with a diacid such as T, for instance 6T, the "6" refers to HMD. In repeat units comprising a diamine and diacid, the diamine is designated first. Furthermore, when "6" is used in combination with a diamine, for instance 66, the first "6" refers to the diamine HMD, and the second "6" refers to adipic acid. Likewise, repeat units derived from other amino acids or lactams are designated as single numbers designating the number of carbon atoms.

In one embodiment the polyamide resins have a melting point of less than 280 °C and comprises one or more polyamides selected from the group consisting of:
**Group (II) polyamides** having a melting point of at least 210°C, and comprising an aliphatic polyamide selected from the group consisting of poly(tetramethylene hexanediamide) (PA46), poly(ε-caprolactam) (PA 6), poly(hexamethylene hexanediamide/(ε-caprolactam/) (PA 66/6) poly(hexamethylene hexanediamide) (PA 66), poly(hexamethylene hexanediamide/hexamethylene decanediamide) (PA66/610), poly(hexamethylene hexanediamide/hexamethylene dodecanediamide) (PA66/612), poly(hexamethylene hexanediamide/decamethylene decanediamide) (PA66/1010), poly(hexamethylene decanediamide) (PA610), poly(hexamethylene dodecanediamide) (PA612), poly(hexamethylene tetradecanediamide) (PA614), and poly(tetramethylene hexanediamide/2-methylpentamethylene hexanediamide) (PA46/D6); wherein within Group (II) Polyamides are **Group (IIA) Polyamides** having a melting point of at least 210 °C and less than 230 °C and **Group (IIB) Polyamides** having a melting point of 230 °C or greater; and
**Group (III) polyamides** having a melting point of at least 230 °C, and comprising
   (aa) 20 to 35 mole percent semiaromatic repeat units derived from monomers selected from one or more of the group consisting of:
      (i) aromatic dicarboxylic acids having 8 to 20 carbon atoms and aliphatic diamines having 4 to 20 carbon atoms; and
   (bb) 65 to 80 mole percent aliphatic repeat units derived from monomers selected from one or more of the group consisting of:
      (ii) an aliphatic dicarboxylic acid having 6 to 20 carbon atoms and said aliphatic diamine having 4 to 20 carbon atoms; and
      (iii) a lactam and/or aminocarboxylic acid having 4 to 20 carbon atoms.

In another embodiment the polyamide resins used in the polyamide compositions described herein have a melting point of greater than 280 °C and comprise one or more polyamides selected from the group consisting of **Group (IV) polyamides** comprising
(cc) 50 to 95 mole percent semiaromatic repeat units derived from monomers selected from one or more of the group consisting of:
   (i) aromatic dicarboxylic acids having 8 to 20 carbon atoms and aliphatic diamines having 4 to 20 carbon atoms; and
(dd) 5 to 50 mole percent aliphatic repeat units derived from monomers selected from one or more of the group consisting of:
   (ii) an aliphatic dicarboxylic acid having 6 to 20 carbon atoms and said aliphatic diamine having 4 to 20 carbon atoms; and
   (iii) a lactam and/or aminocarboxylic acid having 4 to 20 carbon atoms.

Preferred Group (II) polyamides which can be used to prepare molded articles for use in high temperature applications are selected from the group consisting of poly(hexamethylene hexanediamide/(ε-caprolactam/) and (PA 66/6) poly(hexamethylene hexanediamide) (PA 66).

Preferred Group (III) polyamides which can be used to prepare molded articles for use in high temperature applications are selected from the group consisting of poly(tetramethylene hexanediamide/tetramethylene terephthalamide) (PA46/4T), poly(tetramethylene hexanediamide/hexamethylene terephthalamide) (PA46/6T), poly(tetramethylene hexanediamide/2-methylpentamethylene hexanediamide/decamethylene terephthalamide)_PA46/D6/10T), poly(hexamethylene hexanediamide/hexamethylene terephthalamide) (PA66/6T), poly(hexamethylene hexanediamide/hexamethylene isophthalamide/hexamethylene terephthalamide PA66/6I/6T, and poly(hexamethylene hexanediamide/2-methylpentamethylene hexanediamide /hexamethylene terephthalamide (PA66/D6/6T); and a most preferred Group (III) polyamide is PA 66/6T.

Preferred Group (IV) polyamides which can be used to prepare molded articles for use in high temperature applications are selected from the group consisting of poly(tetramethylene terephthalamide/hexamethylene hexanediamide) (PA4T/66), poly(tetramethylene terephthalamide/ε-caprolactam) (PA4T/6), poly(tetramethylene terephthalamide/hexamethylene dodecanediamide) (PA4T/612), poly(tetramethylene terephthalamide/2-methylpentamethylene hexanediamide/hexamethylene hexanediamide) (PA4T/D6/66), poly(hexamethylene terephthalamide/2-methylpentamethylene terephthalamide/hexamethylene hexanediamide) (PA6T/DT/66), poly(hexamethylene terephthalamide/hexamethylene hexanediamide) PA6T/66, poly(hexamethylene terephthalamide /hexamethylene decanediamide) (PA6T/610), poly(hexamethylene terephthalamide/hexamethylene tetradecanediamide) (PA6T/614), poly(nonamethylene terephthalamide/nonamethylene decanediamide) (PA9T/910), poly(nonamethylene terephthalamide/nonamethylene dodecanediamide) (PA9T/912), poly(nonamethylene terephthalamide/11-aminoundecanamide) (PA9T/11), poly(nonamethylene terephthalamide/12-aminododecanamide) (PA9T/12), poly(decamethylene terephthalamide/11-aminoundecanamide) (PA 10T/11), poly(decamethylene terephthalamide/12-aminododecanamide) (PA10T/12) poly(decamethylene terephthalamide/decamethylene decanediamide) (PA1 OT/1010), poly(decamethylene terephthalamide/decamethylene dodecanediamide) (PA10T/1012), poly(decamethylene terephthalamide/tetramethylene hexanediamide) (PA10T/46), poly(decamethylene terephthalamide/ε-caprolactam) (PA10T/6), poly(decamethylene terephthalamide/hexamethylene hexanediamide) (PA10T/66), poly(dodecamethylene terephthalamide/dodecamethylene dodecanediamide) (PA12T/1212), poly(dodecamethylene terephthalamide/ε-caprolactam) (PA12T/6), and poly(dodecamethylene terephthalamide/hexamethylene hexanediamide) (PA12T/66); and a most preferred Group (IV) polyamide is PA6T/66.

In various embodiments the polyamide is a Group (II) Polyamide, Group (III) Polyamide, Group (IV) Polyamide, or a combination of these.

Preferred polyamide resins useful in the polyamide compositions described herein include polyamides selected from the group consisting of poly(hexamethylene hexanediamide) (PA 66), poly(hexamethylene hexanediamide/hexamethylene terephthalamide) (PA 66/6T), poly(ε-caprolactam) (PA 6), poly(hexamethylene terephthalamide/hexamethylene hexanediamide) PA6T/66, and combinations of these.

The polyamide resin may also be blends of two or more polyamides. Preferred blends include those selected from the group consisting of Group (II) and Group (III) Polyamides and Group (II) and Group (IV) Polyamides.

A preferred blend includes Group (II) and (III) Polyamides, and a specific preferred blend includes poly(hexamethylene hexanediamide) (PA 66) and poly(hexamethylene hexanediamide/hexamethylene terephthalamide) (PA 66/6T).

Other preferred blends are poly(hexamethylene hexanediamide) (PA 66) and poly(caprolactam) (PA 6); poly(hexamethylene hexanediamide/hexamethylene terephthalamide) (PA 66/6T) and poly(caprolactam) (PA 6); and poly(hexamethylene hexanediamide) (PA 66) poly(hexamethylene hexanediamide/hexamethylene terephthalamide) (PA 66/6T) and poly(caprolactam) (PA 6). Preferably, in the afore-mentioned blends, poly(caprolactam) is present at 1 to 20 weight percent or 1 to 10 weight percent of the polyamide resin.

The polyamide compositions described herein comprise at least one polyamide resin in an amount that ranges between 39.64 and 90 weight percent, preferably between 50 and 80 weight percent, and more preferably between 55 and 75 weight percent, of the total weight of the polyamide composition. Even though not expressly stated herein, all possible ranges between 40 and 90 weight percent polyamide resin of the total weight of the polyamide composition are contemplated in these compositions.

The polyamide resin has a number average molecular weight of at least 5000, and preferably greater than 10,000, as determined with size exclusion chromatography in hexafluoroisopropanol.

The reinforcement agent may be any inorganic filler which provides a polyamide composition having an initial tensile strength of at least 100 MPa. Preferably the reinforcement agent is selected from the group consisting glass fibers with circular and noncircular cross-section, glass flakes, glass beads, carbon fibers, talc, mica, wollastonite, calcined clay, kaolin, diatomite, magnesium sulfate, magnesium silicate, barium sulfate, titanium dioxide, calcium carbonate, sodium aluminum carbonate, barium ferrite, potassium titanate and mixtures thereof. Preferred reinforcing agents are selected from the group consisting of glass fiber with circular cross-section, glass fiber with noncircular cross-section, carbon fiber, and combinations of these. The glass fiber may have sizing or coupling agents, organic or inorganic materials that improve the bonding between glass and the polyamide resin.

Glass fibers with noncircular cross-section refer to glass fiber having a cross section having a major axis lying perpendicular to a longitudinal direction of the glass fiber and corresponding to the longest linear distance in the cross section. The non-circular cross section has a minor axis corresponding to the longest linear distance in the cross section in a direction perpendicular to the major axis. The non-circular cross section of the fiber may have a variety of shapes including a cocoon-type (figure-eight) shape, a rectangular shape; an elliptical shape; a roughly triangular shape; a polygonal shape; and an oblong shape. As will be understood by those skilled in the art, the cross section may have other shapes. The ratio of the length of the major axis to that of the minor access is preferably between 1.5:1 and 6:1. The ratio is more preferably between 2:1 and 5:1 and yet more preferably between 3:1 to 4:1. Suitable glass fiber are disclosed in EP 0 190 001 and EP 0 196 194.

The polyamide composition described herein comprises 10 to 60 weight percent, preferably 20 to 60, more preferably 20 to 50 or 20 to 45 weight percent, of one or more reinforcement agents. Preferably the reinforcing agent is selected from the group consisting of glass fiber with circular cross-section, glass fiber with noncircular cross-section, and mixtures of these.

The zinc compounds useful in compositions of the invention are zinc salts having a Zn⁺² cation and a negatively charged counterion. Preferably the counterion is a non-toxic and thermally stable up to at least 200 °C, and preferably up to at least 300 °C. The zinc compound has a molecular weight of not more than 1000 including cation and counterion. Useful zinc compounds include those selected from the group consisting of zinc carbonates, titanates, molybdates, sulfates, phosphates, oxides, borates and halides. Specific zinc halides include zinc chloride, bromide and iodide. Specific carboxylates include zinc acetate, stearate, oxalate, palmitate, 2-ethylhexanoate, gluconate, laurate, salicylate, terephthalate, isophthalate, phthalate, succinate, adipate, pyromellitate, benzenetricatrboxylate, butanetetracarboxylate, and trifluoromethanesulfonate.

The zinc compound is present at 0.2 to 5 weight percent, and preferably 0.2 to 4, more preferably 0.2 to 3.0, or yet more preferably 0.2 to 2.0 percent based on the total weight of the polyamide.

Preferably the zinc compound is selected from zinc borate, zinc oxide, and combinations of these.

By the term "zinc borate" is meant one or more compounds having the formula:

(ZnO)_{X}(B₂O₃)_{Y}(H₂O)_{Z}

wherein X is preferably between 2 and 4, inclusive; Y is preferably between 1 and 3, inclusive; and Z is preferably between 0 and 5, inclusive. Zinc borate is sold and supplied by US Borax under the tradename Firebrake®. Preferred forms of zinc borate are of the formula selected from the group consisting of (ZnO)₂(B₂O₃)₃(H₂O)₃.₅ (Firebrake® 290), (ZnO)₄(B₂O₃)₁(H₂O)₁ (Firebrake® 415), (ZnO)₂(B₂O₃)₃(H₂O)₀ (Firebrake® 500), and mixtures thereof.

The zinc borate is present in the polyamide composition in an amount that is 0.1 to 5, preferably 0.2 to 4, more preferably 0.2 to 3.0, or yet more preferably 0.2 to 2.0 percent based on the total weight of the polyamide composition.

For the purposes of determining the amount of zinc borate present, if the zinc borate is a hydrate (i.e., Z is not zero), the weight of the corresponding anhydrous form of the zinc borate is used, thus only the amounts of ZnO and B₂O₃ present in the zinc borate compound are considered to contribute to the zinc borate weight that is used in the calculation. As used herein in conjunction with the amount of zinc borate used in a composition, the term "zinc borate" refers to anhydrous form of the compound in question.

When zinc borate is the zinc compound, the polyhydric alcohol is present in the polyamide composition in a concentration of from 0.5 to 5 weight percent, preferably from 0.5 to 3 weight percent based on the total weight of the polyamide composition.

By the term "zinc oxide" is meant one or more compounds having the formula ZnO.

Zinc oxide is present in the polyamide composition from 0.1 to 5 weight percent, preferably from 0.2 to 3 weight percent or 0.2 to 2.0 weight percent, and more preferably from 0.5 to 2 weight percent.

The copper heat stabilizer used in the polyamide composition described herein is a copper based inorganic heat stabilizer. The heat stabilizer comprises at least one copper compound and preferably at least one alkali metal halide. The copper is present in the form of copper salts wherein the copper is selected from the group consisting of Cu(I), Cu(II), or a mixture thereof. Cu(I) salts are preferred. Examples of copper heat stabilizers useful in the polyamide compositions include copper salts selected from the group consisting of copper iodide, copper bromide, copper chloride, copper fluoride; copper thiocyanate, copper nitrate, copper acetate, copper naphthenate, copper caprate, copper laurate, copper stearate, copper acetylacetonate, and copper oxide. Preferred copper heat stabilizers include copper halides selected from copper iodide, copper bromide, copper chloride, and copper fluoride. A preferred copper species is copper iodide, and preferably copper (I) iodide.

It is preferred that the copper heat stabilizer also include an additional metal halide selected from the group consisting of Lil, Nal, KI, Mgl₂, KBr, and CaI₂ with KI or KBr being preferred.

Preferably, the copper heat stabilizer is a mixture of 5 to 50 weight percent copper salt, 50 to 95 weight percent of a metal halide, and from zero to 15 weight percent of a fatty acid salt. Even more preferably, the copper heat stabilizer is a mixture of 10 to 30 weight percent copper salt, 70 to 90 weight percent metal halide, and from zero to 15 weight percent fatty acid salt, and most preferably the copper heat stabilizer is a mixture of 10 to 20 weight percent copper salt, 75 to 90 weight percent metal halide, and from zero to 12 weight percent fatty acid salt. A preferred heat stabilizer is a mixture of copper iodide and potassium iodide (Cul/KI). An example of a copper heat stabilizer is Polyadd P201 from Ciba Specialty Chemicals comprising a blend of 7:1:1 weight ratio of potassium iodide, cuprous iodide, and aluminum stearate respectively.

The copper stabilizer useful in the polyamide composition described herein may also be blended or mixed with a fatty acid metal salt carrier material. An example of a fatty acid salt carrier material is aluminum distearate.

The copper stabilizer is present in the polyamide composition from 0.05 to 1 weight percent and most preferably 0.05 to 0.75 weight percent based on the total weight of the polyamide composition.

Polyhydric alcohols useful in the polyamide compositions described herein have more than two hydroxyl groups and a have a hydroxyl equivalent weight of 30 to 1000 g/equivalent, and preferably 80 to 500 g/equivalent, as determined by calculation, or if an oligomer is used, by hydroxyl number determination according to ASTM E 1899-08. The polyhydric alcohols have a Mₙ of less than 2000 by molecular weight calculation or if an oligomer is used, as determined for polymeric materials with gel permeation chromatography (GPC).

Polyhydric alcohols may be selected from aliphatic hydroxylic compounds containing more than two hydroxyl groups, aliphatic-cycloaliphatic compounds containing more than two hydroxyl groups, cycloaliphatic compounds containing more than two hydroxyl groups, aromatic and saccharides.

An aliphatic chain in the polyhydric alcohol can include not only carbon atoms but also one or more hetero atoms which may be selected, for example, from nitrogen, oxygen and sulphur atoms. A cycloaliphatic ring present in the polyhydric alcohol can be monocyclic or part of a bicyclic or polycyclic ring system and may be carbocyclic or heterocyclic. A heterocyclic ring present in the polyhydric alcohol can be monocyclic or part of a bicyclic or polycyclic ring system and may include one or more hetero atoms which may be selected, for example, from nitrogen, oxygen and sulphur atoms. The one or more polyhydric alcohols may contain one or more substituents, such as ether, carboxylic acid, carboxylic acid amide or carboxylic acid ester groups.

Examples of polyhydric alcohol containing more than two hydroxyl groups include, without limitation, triols, such as glycerol, trimethylolpropane, 2,3-di-(2'-hydroxyethyl)-cyclohexan-1-ol, hexane-1,2,6-triol, 1,1,1-tris-(hydroxymethyl)ethane, 3-(2'-hydroxyethoxy)-propane-1,2-diol, 3-(2'-hydroxypropoxy)-propane-1,2-diol, 2-(2'-hydroxyethoxy)-hexane-1,2-diol, 6-(2'-hydroxypropoxy)-hexane-1,2-diol, 1,1,1-tris-[(2'-hydroxyethoxy)-methyl]-ethane, 1,1,1-tris-[(2'-hydroxypropoxy)-methyl]-propane, 1,1,1-tris-(4'-hydroxyphenyl)-ethane, 1,1,1-tris-(hydroxyphenyl)-propane, 1,1,3-tris-(dihydroxy-3-methylphenyl)-propane, 1,1,4-tris-(dihydroxyphenyl)-butane, 1,1,5-tris-(hydroxyphenyl)-3-methylpentane, di-trimethylopropane, trimethylolpropane ethoxylates, or trimethylolpropane propoxylates; polyols such as pentaerythritol, dipentaerythritol, and tripentaerythritol; and saccharides, such as cyclodextrin, D-mannose, glucose, galactose, sucrose, fructose, xylose, arabinose, D-mannitol, D-sorbitol, D-or L-arabitol, xylitol, iditol, talitol, allitol, altritol, guilitol, erythritol, threitol, and D-gulonic-y-lactone; and the like.

Preferred polyhydric alcohols include those having a pair of hydroxyl groups which are attached to respective carbon atoms which are separated one from another by at least one atom. In one embodiment the polyhydric alcohol does not include an amine functionality in the form of primary, secondary or tertiary amine. Especially preferred polyhydric alcohols are those in which a pair of hydroxyl groups is attached to respective carbon atoms which are separated one from another by a single carbon atom.

Preferably, the polyhydric alcohol used in the polyamide composition is selected from the group of glycerol (GLY), pentaerythritol (PE), dipentaerythritol (DPE), tripentaerythritol (TPE), di-trimethylolpropane (DTP), trimethylolpropane (TMP), 1,1,1-tris(hydroxymethyl) propane (THE) and mixtures of these. The concentration of polyhydric alcohol in the polyamide composition, if used, ranges from 0.25 to 5 weight percent, and preferably 0.5 to 4 weight percent and more preferably 1.0 to 3.0 weight percent. In a preferred embodiment the polyamide composition includes 0.25 to 5.0 weight percent polyhydric alcohol.

When the zinc compound is zinc oxide, the polyhydric alcohol preferably ranges from 0 to 3 weight percent based on the total weight of the polyamide composition. When the zinc compound is zinc borate, the polyhydric alcohol ranges from 0.1 to 3 weight percent, preferably 0.2 to 2 weight percent, more preferably 0.2 to 1.7 weight percent based on the total weight of the polyamide composition.

The polyamide compositions described herein may further comprise additional additives that include, but are not limited to, one or more of the following components as well as combinations of these: fillers, oxidative stabilizers, ultraviolet light stabilizers, one or more flame retardant agents, lubricants, plasticizers, flow enhancing additives, antistatic agents, coloring agents, nucleating agents, crystallization promoting agents, and other processing aids known in the field of compounding polymers.

The polyamide composition described herein additionally comprises a flame retardant, the flame retardant being present at a concentration of less than 2 weight percent. The flame retardant is selected from the group consisting of organic halogenated flame retardant having 50 to 70 % by weight halogen selected from the group consisting of bromine and chlorine; and organic phosphinate flame retardants as disclosed in US patent 7,294,661 and references cited therein. Halogenated flame retardants include those based on brominated polystyrene and/pr brominated poly-phenylene ether containing 50-70 % by weight bromine.

The polyamide composition described herein also comprises a flame retardant, the heat aged tensile strength of the polyamide composition comprising the flame retardant should be at least 100 MPa, preferably at least 115 MPa, more preferably at least 130 MPa, and most preferably at least 150MPa.

The polyamide compositions described herein may be used in the preparation of molded or extruded articles such as components for automobiles, including various electric and electronic components. Specific examples of molded or extruded articles are selected from the group consisting of charge air coolers (CAC); cylinder head covers (CHC); oil pans; engine cooling systems, including thermostat and heater housings and coolant pumps; exhaust systems including mufflers and housings for catalytic converters; air intake manifolds (AIM); and timing chain belt front covers. As an illustrative example of desired mechanical resistance against long-term high temperature exposure, a charge air cooler can be mentioned. A charge air cooler is a part of the radiator of a vehicle that improves engine combustion efficiency. Charge air coolers reduce the charge air temperature and increase the density of the air after compression in the turbocharger thus allowing more air to enter into the cylinders to improve engine efficiency. Since the temperature of the incoming air can be more than 200°C when it enters the charge air cooler, it is required that this part be made out of a composition maintaining good mechanical properties under high temperatures for an extended period of time.

The polyamide compositions described herein are made by a method of melt-mixing, to form the composition:
a) 40 to 90 weight percent of one or more polyamide resins;
b) 10 to 60 weight percent reinforcing agent selected from the group consisting of glass fibers or carbon fibers;
c) 0.2 to 5 weight percent of a zinc compound selected from the group consisting of zinc carbonates, titanates, molybdates, sulfates, phosphates, oxides, borates and halides and mixtures of these ;
d) 0.05 to 1 weight percent copper heat stabilizer;
e) 0 to 5 weight percent polyhydric alcohol;
with the proviso that when zinc borate is the zinc compound or when zinc oxide is the zinc compound and is present at 0.65 weight percent or less, the polyamide composition comprises 0.25 to 5 weight percent polyhydric alcohol;
wherein all weight percentages are based on the total weight of the polyamide composition and wherein a flame retardant is added, being selected from the group consisting of organic halogenated flame retardant having 50 to 70 % by weight halogen selected from the group consisting of bromine and chlorine; and organic phosphinate flame retardant.

The processes described herein include any and all variations described above for these compositions, including but not limited to variations in composition elements and preferred ranges for compositional elements.

The polyamide compositions described herein are melt-mixed blends, wherein all the polymeric components are well-dispersed within each other and all the non-polymeric ingredients are well-dispersed such that the blend forms a unified whole. They are made by blending the components in any order or combination, at any convenient temperature as long as the polymeric ingredients are in the melt or molten state. Blending or mixing temperatures are easily determined by one of knowledge in the art.

Any melt-mixing method may be used to combine the polymeric components and non-polymeric components. For example, the polymeric components and non-polymeric ingredients may be added to a melt mixer, such as a single or twin-screw extruder; a blender; a single or twin-screw kneader; or a Banbury mixer, either all at once through a single step addition, or in a stepwise fashion, and then melt-mixed. When adding the polymeric components and non-polymeric ingredients in a stepwise fashion, part of the polymeric components and/or non-polymeric ingredients are first added and melt-mixed with the remaining polymeric components and non-polymeric ingredients being subsequently added and further melt-mixed until a well-mixed composition is obtained. The melt-mixing can result in pellets, which can be extruded or molded into articles.

The polyamide compositions described herein may be shaped into articles using methods known to those skilled in the art, such as injection molding, blow molding, injection blow molding, extrusion, thermoforming, melt casting, vacuum molding, rotational molding, calendar molding, slush molding, filament extrusion and fiber spinning.

Articles prepared from polyamide compositions that exhibit the combination of a desirable heat stability at 230 °C while simultaneously having a heat aged tensile strength of at least 100 MPa are highly desirable for use in demanding high temperature applications. It has surprisingly been discovered that polyamide compositions comprising a), b), c), d) and optionally e) as disclosed above have tensile strength retention of at least 66% the initial tensile strength after heat aging at 230 °C for 1000 h and simultaneously exhibit a heat aged tensile strength of at least 100 MPa.

Articles prepared from the polyamide compositions described herein exhibit a tensile strength retention of at least 66%, preferably at least 75%, more preferably at least 85%, and most preferably at least 90% tensile strength retention when heat aged at 230 °C for 1000 hrs. It is also desirable for articles prepared from the polyamide compositions described herein to have a heat aged tensile strength of at least 100 MPa, preferably at least 115 MPa, more preferably at least 130 MPa, and most preferably at least 150 MPa.

### Materials

PA 66 refers to an aliphatic polyamide made of 1,6-hexanedioic acid and 1,6-hexamethylenediamine having an relative viscosity in the range of 46 - 51 and a melting point of 263 °C, commercially available from E.I. DuPont de Nemours and Company, Wilmington, Delaware, USA under the trademark Zytel® 101 NC010.

PA 66/6T refers to PA66/6T (75/25 molar ratio repeat units) with amine ends approximately 80 meq/kg, having a typical relative viscosity (RV) of 41, according to ASTM D-789 method, and a typical melt point of 268°C, that was provided according to the following procedure:
Polyamide 66 salt solution (3928 Ibs. of a 51.7 percent by weight with a pH of 8.1) and 2926 Ibs. of a 25.2% by weight of polyamide 6T salt solution with a pH of 7.6 were charged into an autoclave with 100 g of a conventional antifoam agent, 20g of sodium hypophosphite, 220g of sodium bicarbonate, 2476 g of 80% HMD solution in water, and 1584 g of glacial acetic. The solution was then heated while the pressure was allowed to rise to 265 psia at which point, steam was vented to maintain the pressure at 265 psia and heating was continued until the temperature of the batch reached 250°C. The pressure was then reduced slowly to 6 psia, while the batch temperature was allowed to further rise to 280-290 °C. The pressure was then held at 6 psia and the temperature was held at 280-290 °C for 20 minutes. Finally, the polymer melt was extruded into strands, cooled, and cut into pellets.

PA 6T/66 refers to Zytel® HTN502HNC010 copolyamide, made from terephthalic acid, adipic acid, and hexamethylenediamine; wherein the two acids are used in a 55:45 molar ratio; having a melting point of 310°C and an inherent viscosity (IV), according to ASTM D2857 method, typically about 1.07, available from E.I. DuPont de Nemours and Company, Wilmington, Delaware, USA.

PA 6 refers to Ultramid® B27 polyamide 6 resin (polycaprolactam) available from BASF Corporation, Florham Park, NJ.

Glass fibers A refers to NEG D187H glass fibers manufactured by Nippon Electric Glass, Osaka, Japan.

Copper Heat Stabilizer A - refers to a mixture of 7 parts potassium iodide, 1 part cuprous (I) iodide, and 0.5 parts aluminum distearate as a carrier.

Copper Heat Stabilizer B - refers to a mixture of 7 parts potassium bromide, 1 part cuprous (I) iodide, and 0.5 parts aluminum distearate as a carrier.

Zinc Borate - refers to Firebrake ZB, available from U.S. Borax, Inc. Wilmington, California, USA.

Zinc oxide A refers to a very fine particle size, high surface area zinc oxide having a mean particle size of 0.12 microns, a surface area of 9.0 m²/g, and is available as KADOX® 911 from The HallStar Company, Chicago, IL.

Zinc oxide B refers to a very fine particle size, high surface area zinc oxide having a mean particle size of 0.21 microns, a surface area of 5.0 m²/g, and is available as KADOX® 920 from The HallStar Company, Chicago, IL.

Zinc oxide C refers to a fine particle size, low surface area zinc oxide having a mean particle size of 0.33 microns, a surface area of 3.2 m²/g, and is available as KADOX® 930 from The HallStar Company, Chicago, IL.

Zinc oxide D is puriss. p.a., ACS reagent, ≥ 99.0% (KT) available from Sigma-Aldrich.

DPE refers to dipentaerythritol.

PEG refers to poly(ethylene glycol) average Mn 20,000 available from Sigma-Aldrich.

Black Pigment A refers to ZYTEL® FE3786 BK031 C black concentrate, a 40 wt % nigrosine black pigment concentrate in a PA66 carrier.

Black Pigment B refers ZYTEL ® FE3779 BK031C black concentrate, a 25 wt % carbon black in a PA6 carrier.

Black Pigment C refers to ZYTEL® FE6508 BK031C black concentrate, a 40 wt % nigrosine black pigment concentrate in a PA66 carrier.

Kemamide E180 refers to a fatty amide mold release agent available from Chemtura Corporation, Middlebury, Conn.

Aluminum distearate is a wax supplied by PMC Global, Inc. Sun Valley, CA, USA.

Plasthall® 809 is polyethylene glycol 400 di-2-ethylhexoate available from C.P. Hall Company, Chicago, Illinois.

Licowax OP is a lubricant manufactured by Clariant Corp., Charlotte, NC.

### Methods

Compounding Method Examples and Comparative Examples listed in Tables 1-7 were prepared by melt blending the ingredients listed in the Tables in a 30 mm twin screw extruder (ZSK 30 by Coperion) operating at 280 °C for Polyamide 66 and 66/6T compositions and 310°C barrel setting for Polyamide 6T/66 compositions, using a screw speed of 300 rpm, a throughput of 13.6 kg/hour and a melt temperature measured by hand of 320 - 355°C for the all compositions. The glass fibers were added to the melt through a screw side feeder. Ingredient quantities shown in the Tables are given in weight percent on the basis of the total weight of the polyamide composition.

The compounded mixture was extruded in the form of laces or strands, cooled in a water bath, chopped into granules and placed into sealed aluminum lined bags in order to prevent moisture pick up.

### Mechanical Tensile Properties

Mechanical tensile properties, i.e. E-modulus, stress at break (Tensile strength) and strain at break (elongation at break) were measured according to ISO 527-2/1 BA. Measurements were made on 2 mm thick injection molded ISO tensile bars at a testing speed of 5 mm/min. Mold temperature for PA 6T/66 test specimens was 90 - 100°C and melt temperature was 325 - 330 °C for both resins.

The initial tensile strength and initial elongation of the polyamide compositions were determined on tensile test bars which had not been exposed to air oven aging. In other words, the tensile bars were tested before being exposed to 230 °C for 1000 hrs.

### Air Oven Ageing (AOA)

A compositionally identical set of tensile test bars for each polyamide composition which were used for dry as molded or initial tensile strength and elongation testing was then exposed to air oven aging at 230 °C for 500 h and then tested for tensile strength and elongation. A compositionally identical set of tensile test bars was exposed to air oven aging at 230 °C for 1000 h and tested for tensile strength and elongation. These tensile strength and elongation values are shown in the tables.

The test specimens (2 mm thick tensile bars) were heat aged in re-circulating air ovens (Heraeus type UT6060) according to the procedure detailed in ISO 2578. At various heat aging times, the test specimens were removed from the oven, allowed to cool to room temperature and stored in an environmentally controlled room (23 °C and 50 % relative humidity) until tested. The tensile mechanical properties were then measured according to ISO 527 using a Zwick tensile instrument. The average values obtained from 5 specimens are given in the Tables.

Retention of tensile strength (TS) and elongation at break (EL) corresponds to the percentage of the tensile strength and elongation at break after heat aging for 500 or 1000 hours in comparison with the tensile strength and elongation at break values of tensile bars which were not heat aged. The retention of tensile strength and elongation at break of dry as molded test specimens is considered as being 100%.

### Examples

The Examples (designated with E prefix) and Comparative Examples (designated with a C prefix) below are intended to further illuminate and not to limit the scope of the compositions, methods, and articles described herein.

In the following discussion referring to the % tensile strength retention is that achieved after AOA for 1000 h at 230°C.
Table 1A and 1B, Examples 1 and 2 and Comparative Examples C1 - C10
   C1 was a control comprising PA 66/6T, glass fiber and copper stabilizer, but absent zinc compound and polyhydric alcohol. C1 exhibited 0 % tensile strength retention after AOA 1000 h/230 °C.
   Comparative Examples C2, and C4 to C6 showed that polyamide compositions comprising zinc borate, copper heat stabilizer, and reinforcing agent but absent a polyhydric alcohol, had a maximum tensile strength retention of 60%.
   C3, comprising zinc borate but absent copper heat stabilizer, exhibited 6% retention of tensile strength.
   C7, comprising copper heat stabilizer, reinforcing agent, and polyhydric alcohol, but absent zinc compound, exhibited 0% tensile strength retention.
   C8 to C10, absent a reinforcing agent but including various combinations of copper heat stabilizer, polyhydric alcohol, and zinc borate showed that the presence of a reinforcing agent was a necessary element to achieve the recited heat stability and heat aged tensile strength.
   E1 and E2, comprising copper heat stabilizer, reinforcing agent, DPE, and zinc borate exhibited retention of tensile strength of 86% and 88%, respectively.
Table 2, Examples E3 to E8 exhibited a synergistic effect obtained when all recited elements were present in the polyamide composition. C11, absent polyhydric alcohol, showed significantly lower % tensile strength retention compared with E7 and E8.
Table 3 illustrated examples of the synergistic effect of the combination of a polyamide resin, a reinforcing agent, a copper heat stabilizer, zinc oxide at 0.5 weight percent, and DPE. E9 and E10 showed an improvement in tensile strength retention versus that of the composition of C12, absent polyhydric alcohol and zinc oxide. C14 showed that the addition of zinc oxide to the composition of C13 failed to provide at least 66% tensile strength retention. E11 showed a 22% improvement in tensile strength retention compared to C15 absent polyhydric alcohol and zinc.
Table 4 showed the addition of polyhydric alcohol (C17) to the composition of C16 comprising PA 6T/66 did not improve tensile strength retention. When zinc oxide at 0.5 weight percent was added to C17 the resulting polyamide composition exhibited a dramatic increase in tensile strength retention.
Table 5, C18 to C22 showed that all elements of the recited composition must be present to achieve the desired heat stability and heat aged tensile strength. C18 to C21 did not comprise a copper heat stabilizer.
Table 6A and 6B, E13 and E14 showed that when the concentration of zinc oxide was greater than 0.65 weight percent, the presence of polyhydric alcohol was not necessary to achieve a desired heat stability. C22 and C23 showed that absent copper heat stabilizer, the combination of a polyamide resin, glass fiber, and zinc oxide were not sufficient to achieve the desired heat stability. C24 and C25 showed that absent zinc oxide, the polyamide composition failed to achieve good heat stability. E15 and E16 showed the synergistic effect of the combination of polyamide resin, a reinforcing agent, a copper heat stabilizer, and zinc oxide in achieving the desired heat stability. C26, C28, and C29 did not comprise zinc oxide and failed to achieve the desired heat stability.
Table 7, E17 and E18, showed that, absent polyhydric alcohol, the polyamide composition including zinc oxide at greater than 0.65 weight percent exhibited significant improvement of AOA tensile strength retention over C30 and C31, respectively.

**Table 1A**

| Example | C1 | C2 | C3 | C4 | C5 | C6 |
|---|---|---|---|---|---|---|
| PA 66/6T | 63.17 | 62.92 | 63.39 | 62.67 | 62.42 | 62.17 |
| Glass fiber A | 35.00 | 35.00 | 35.00 | 35.00 | 35.00 | 35.00 |
| Copper Heat Stabilizer A | 0.30 | 0.30 | | 0.30 | 0.30 | 0.30 |
| Zinc Borate | | 0.25 | 1.51 | 0.50 | 0.75 | 1.00 |
| Black Pigment A | 0.60 | 0.60 | | 0.60 | 0.60 | 0.60 |
| Black Pigment B | 0.83 | 0.83 | | 0.83 | 0.83 | 0.83 |
| Kemamide E180 | 0.10 | 0.10 | 0.10 | 0.10 | 0.10 | 0.10 |

| Tensile Properties, Dry-As-Molded | | | | | | |
|---|---|---|---|---|---|---|
| Tensile Strength [MPa] | 191 | 190 | 162 | 190 | 189 | 191 |
| Elongation [%] | 5.2 | 5.1 | 3.4 | 5.1 | 5.3 | 5.4 |

| Tensile Properties, 500 h at 230 °C | | | | | | |
|---|---|---|---|---|---|---|
| Tensile Strength [MPa] | 57 | 135 | 43 | 147 | 142 | 133 |
| *Tensile Strength Retention* | *30%* | *71%* | *27%* | *77%* | *75%* | *70%* |
| Elongation [%] | 1.1 | 2.1 | 1.0 | 2.3 | 2.2 | 2.0 |
| *Elongation Retention* | *21%* | *41%* | *29%* | *45%* | *42%* | *37%* |

| Tensile Properties, 1000 h at 230 °C | | | | | | |
|---|---|---|---|---|---|---|
| Tensile Strength [MPa] | 0 | 81 | 9 | 90 | 90 | 99 |
| *Tensile Strength Retention* | *0%* | *43%* | *6%* | *47%* | *48%* | *52%* |
| Elongation [%] | 0 | 1.7 | 0.3 | 1.7 | 1.7 | 1.7 |
| *Elongation Retention* | *0%* | *33%* | *9%* | *33%* | *32%* | *31%* |

**Table 1B**

| Example | E1 | E2 | C7 | C8 | C9 | C10 |
|---|---|---|---|---|---|---|
| PA 66/6T | 61.17 | 60.17 | 61.57 | 94.60 | 94.10 | 92.60 |
| PA 6 | | | | 5.00 | 5.00 | 5.00 |
| Glass fiber A | 35.00 | 35.00 | 35.00 | | | |
| Copper Heat Stabilizer A | 0.30 | 0.30 | 0.40 | 0.30 | 0.30 | 0.30 |
| Zinc Borate | 0.50 | 0.50 | | | 0.50 | 0.50 |
| DPE | 1.50 | 1.50 | 1.50 | | | 1.50 |
| PEG | | 1.00 | | | | |
| Black Pigment A | 0.60 | 0.60 | 0.60 | | | |
| Black Pigment B | 0.83 | 0.83 | 0.83 | | | |
| Kemamide E180 | 0.10 | 0.10 | 0.10 | 0.10 | 0.10 | 0.10 |

| Tensile Properties, Dry-As-Molded | | | | | | |
|---|---|---|---|---|---|---|
| Tensile Strength [MPa] | 196 | 193 | 203 | 68 | 69 | 75 |
| Elongation [%] | 5.5 | 5.3 | 3.5 | 5.3 | 5.6 | 5.0 |

| Tensile Properties, 500 h at 230 °C | | | | | | |
|---|---|---|---|---|---|---|
| Tensile Strength [MPa] | 186 | 174 | 128 | 20 | 31 | 27 |
| *Tensile Strength Retention* | *95%* | *90%* | *63%* | *29%* | *45%* | *36%* |
| Elongation [%] | 2.8 | 2.6 | 1.9 | 0.8 | 1.3 | 1.0 |
| *Elongation Retention* | *51%* | *49%* | *54%* | *15%* | *23%* | *20%* |

| Tensile Properties, 1000 h at 230 °C | | | | | | |
|---|---|---|---|---|---|---|
| Tensile Strength [MPa] | 168 | 170 | 0 | 0 | 30 | 27 |
| *Tensile Strength Retention* | *86%* | *88%* | *0%* | *0%* | *43%* | *36%* |
| Elongation [%] | 2.4 | 2.4 | 0 | 0 | 1.2 | 1.0 |
| *Elongation Retention* | *44%* | *45%* | *0%* | *0%* | *21%* | *20%* |

**Table 2**

| Example | E3 | E4 | E5 | E6 | C11 | E7 | E8 |
|---|---|---|---|---|---|---|---|
| PA 66 | 54.88 | 53.40 | 75.54 | 40.12 | 57.34 | 56.07 | 56.32 |
| PA 6 | 5.00 | 5.00 | 5.00 | 5.00 | 5.00 | 5.00 | 5.00 |
| Glass fiber | 35.00 | 35.00 | 15.00 | 50.00 | 35.00 | 35.00 | 35.00 |
| Copper Heat Stabilizer A | 0.30 | 0.30 | 0.30 | 0.30 | 0.30 | 0.40 | 0.40 |
| Zinc Borate | 0.50 | 0.50 | 0.50 | 0.50 | 0.50 | 0.50 | 0.25 |
| DPE | 1.50 | 3.00 | 1.50 | 1.50 | | 1.50 | 1.50 |
| PEG | 1.00 | 1.00 | | 1.00 | | | |
| Black Pigment B | 0.83 | 0.83 | 0.83 | 0.83 | 0.83 | 0.83 | 0.83 |
| Black Pigment D | 0.84 | 0.81 | 1.15 | 0.61 | 0.87 | | |
| Black Pigment A | | | | | | 0.60 | 0.60 |
| Aluminum Distearate | 0.06 | 0.05 | 0.08 | 0.04 | 0.06 | | |
| Kemamide E180 | 0.10 | 0.10 | 0.10 | 0.10 | 0.10 | 0.10 | 0.10 |

| Tensile Properties, Dry-As-Molded | | | | | | | |
|---|---|---|---|---|---|---|---|
| Tensile Strength [MPa] | 213 | 199 | 139 | 212 | 203 | 214 | 200 |
| Elongation [%] | 3.5 | 3.0 | 3.4 | 2.4 | 3.7 | 4.8 | 4.6 |

| Tensile Properties, 500 h at 230 °C | | | | | | | |
|---|---|---|---|---|---|---|---|
| Tensile Strength [MPa] | 168 | 201 | 101 | 216 | 150 | 199 | 208 |
| *Tensile Strength Retention* | *79%* | *101%* | *73%* | *102%* | *74%* | *93%* | *104%* |
| Elongation [%] | 2.3 | 2.9 | 2.5 | 3.6 | 2.9 | 2.7 | 2.8 |
| *Elongation Retention* | *66%* | *97%* | *73%* | *150%* | *78%* | *56%* | *61%* |

| Tensile Properties, 1000 h at 230 °C | | | | | | | |
|---|---|---|---|---|---|---|---|
| Tensile Strength [MPa] | 140 | 194 | 137 | 212 | 148 | 195 | 207 |
| *Tensile Strength Retention* | *66%* | *97%* | *99%* | *100%* | *73%* | *91%* | *104%* |
| Elongation [%] | 2.0 | 2.7 | 3.9 | 2.4 | 2.0 | 2.7 | 2.8 |
| *Elongation Retention* | *57%* | *90%* | *115%* | *100%* | *54%* | *56%* | *61%* |

**Table 3**

| Example | C12 | E9 | E10 | C13 | C14 | C15 | E11 |
|---|---|---|---|---|---|---|---|
| PA 66 | 56.85 | 54.88 | 53.40 | 57.83 | 57.34 | 43.07 | 41.10 |
| PA 6 | 5.00 | 5.00 | 5.00 | 5.00 | 5.00 | 5.00 | 5.00 |
| Glass Fiber | 35.00 | 35.00 | 35.00 | 35.00 | 35.00 | 50.00 | 50.00 |
| Copper Heat Stabilizer A | 0.30 | 0.30 | 0.30 | 0.30 | 0.30 | 0.30 | 0.30 |
| Zinc Oxide D | | 0.50 | 0.50 | | 0.50 | | 0.50 |
| DPE | | 1.50 | 3.00 | | | | 1.50 |
| PEG | 1.00 | 1.00 | 1.00 | | | | |
| Black Pigment B | 0.83 | 0.83 | 0.83 | 0.83 | 0.83 | 0.83 | 0.83 |
| Black Pigment C | 0.87 | 0.84 | 0.81 | 0.88 | 0.87 | 0.66 | 0.63 |
| Aluminum Stearate | 0.06 | 0.06 | 0.05 | 0.06 | 0.06 | 0.04 | 0.04 |
| Kemamide E180 | 0.10 | 0.10 | 0.10 | 0.10 | 0.10 | 0.10 | 0.10 |

| Tensile Properties, Dry-As-Molded | | | | | | | |
|---|---|---|---|---|---|---|---|
| Tensile Strength [MPa] | 206 | 178 | 175 | 206 | 184 | 246 | 215 |
| Elongation [%] | 3.9 | 3.0 | 2.9 | 3.9 | 3.1 | 3.1 | 2.6 |

| Tensile Properties, 500 h at 230 °C | | | | | | | |
|---|---|---|---|---|---|---|---|
| Tensile Strength [MPa] | 133 | 183 | 172 | 105 | 125 | 183 | 207 |
| *Tensile Strength Retention* | *65%* | *103%* | *98%* | *51%* | *68%* | *74%* | *96%* |
| Elongation [%] | 2.3 | 2.7 | 2.5 | 1.9 | 2.6 | 2.8 | 3.3 |
| *Elongation Retention* | *59%* | *90%* | *86%* | *49%* | *84%* | *90%* | *127%* |

| Tensile Properties, 1000 h at 230 °C | | | | | | | |
|---|---|---|---|---|---|---|---|
| Tensile Strength [MPa] | 147 | 180 | 175 | 93 | 97 | 182 | 206 |
| *Tensile Strength Retention* | *71%* | *101%* | *100%* | *45%* | *53%* | *74%* | *96%* |
| Elongation [%] | 1.9 | 2.6 | 2.5 | 1.5 | 1.4 | 1.9 | 2.3 |
| *Elongation Retention* | *49%* | *87%* | *86%* | *38%* | *45%* | *61%* | *88%* |

**Table 4**

| Example | C16 | C17 | E12 |
|---|---|---|---|
| PA 6T/66 | 58.07 | 55.57 | 55.07 |
| PA 6 | 5.00 | 5.00 | 5.00 |
| Glass Fiber | 35.00 | 35.00 | 35.00 |
| DPE | | 2.50 | 2.50 |
| Zinc Oxide C | | | 0.50 |
| Copper Heat Stabilizer B | 0.40 | 0.40 | 0.40 |
| Black Pigment A | 0.60 | 0.60 | 0.60 |
| Black Pigment B | 0.83 | 0.83 | 0.83 |
| Licowax OP | 0.10 | 0.10 | 0.10 |

| Tensile Properties, Dry-As-Molded | | | |
|---|---|---|---|
| Tensile Strength [MPa] | 216 | 200 | 156 |
| Elongation [%] | 2.7 | 2.4 | 1.9 |

| Tensile Properties, 500 h at 230 °C | | | |
|---|---|---|---|
| Tensile Strength [MPa] | 165 | 187 | 185 |
| *Tensile Strength Retention* | *76%* | *94%* | *119%* |
| Elongation [%] | 1.9 | 2.0 | 2.0 |
| *Elongation Retention* | *70%* | *83%* | *105%* |

| Tensile Properties, 1000 h at 230 °C | | | |
|---|---|---|---|
| Tensile Strength [MPa] | 177 | 159 | 192 |
| *Tensile Strength Retention* | *82%* | *80%* | *123%* |
| Elongation [%] | 2.0 | 1.7 | 2.1 |
| *Elongation Retention* | *74%* | *71%* | *111%* |

**Table 5**

| Example | C18 | C19 | C20 | C21 |
|---|---|---|---|---|
| PA 66/6T | 64.90 | 64.55 | 64.19 | 63.48 |
| Glass Fiber | 35.00 | 35.00 | 35.00 | 35.00 |
| Zinc Oxide A | | 0.35 | 0.71 | 1.42 |
| Kemamide E180 | 0.10 | 0.10 | 0.10 | 0.10 |

| Tensile Properties, Dry-As-Molded | | | | |
|---|---|---|---|---|
| Tensile Strength [MPa] | 207 | 178 | 180 | 171 |
| Elongation [%] | 5.8 | 4.0 | 4.2 | 3.8 |

| Tensile Properties, 500 h at 230 °C | | | | |
|---|---|---|---|---|
| Tensile Strength [MPa] | 12 | 144 | 166 | 149 |
| *Tensile Strength Retention* | *6%* | *81%* | *92%* | *87%* |
| Elongation [%] | 0.3 | 3.4 | 3.9 | 3.5 |
| *Elongation Retention* | *5%* | *84%* | *94%* | *90%* |

| Tensile Properties, 1000 h at 230°C | | | | |
|---|---|---|---|---|
| Tensile Strength [MPa] | 0 | 84 | 76 | 62 |
| *Tensile Strength Retention* | *0%* | *47%* | *42%* | *36%* |
| Elongation [%] | 0.0 | 2.8 | 2.7 | 2.3 |
| *Elongation Retention* | *0%* | *70%* | *65%* | *60%* |

**Table 6A**

| Example | C22 | C23 | C24 | E13 | C25 | E14 |
|---|---|---|---|---|---|---|
| PA 66/6T | 64.19 | 63.48 | 63.00 | 62.29 | 58.00 | 57.29 |
| PA 6 | | | | | 5.00 | 5.00 |
| Glass Fiber | 35.00 | 35.00 | 35.00 | 35.00 | 35.00 | 35.00 |
| Copper Heat Stabilizer A | | | 0.30 | 0.30 | 0.30 | 0.30 |
| DPE | | | | | | |
| Zinc oxide B | 0.71 | 1.42 | | 0.71 | | 0.71 |
| Black Pigment A | | | 0.60 | 0.60 | 0.60 | 0.60 |
| Black Pigment B | | | 1.00 | 1.00 | 1.00 | 1.00 |
| Kemamide E180 | 0.10 | 0.10 | 0.10 | 0.10 | 0.10 | 0.10 |

| Tensile Properties, Dry-As-Molded | | | | | | |
|---|---|---|---|---|---|---|
| Tensile Strength [MPa] | 170 | 167 | 188 | 163 | 191 | 163 |
| Elongation [%] | 3.9 | 3.9 | 5.2 | 4.0 | 5.4 | 4.0 |

| Tensile Properties, 500 h at 230 °C | | | | | | |
|---|---|---|---|---|---|---|
| Tensile Strength [MPa] | 161 | 143 | 56 | 160 | 113 | 163 |
| *Tensile Strength Retention* | *95%* | *86%* | *30%* | *98%* | *59%* | *100%* |
| Elongation [%] | 3.8 | 3.2 | 1.7 | 4.1 | 2.8 | 4.4 |
| *Elongation Retention* | *97%* | *83%* | *32%* | *103%* | *52%* | *108%* |

| Tensile Properties, 1000 h at 230 °C | | | | | | |
|---|---|---|---|---|---|---|
| Tensile Strength [MPa] | 72 | 65 | 0 | 169 | 17 | 173 |
| *Tensile Strength Retention* | *42%* | *39%* | *0%* | *104%* | *9%* | *106%* |
| Elongation [%] | 3 | 3 | 0.0 | 4.1 | 0 | 4.3 |
| *Elongation Retention* | *70%* | *66%* | *0%* | *103* | *6%* | *107* |

**Table 6B**

| Example | C26 | C27 | C28 | E15 | C29 | E16 |
|---|---|---|---|---|---|---|
| PA 66/6T | 63.60 | 62.89 | 61.70 | 60.99 | 56.70 | 55.99 |
| PA 6 | | | | | 5.00 | 5.00 |
| Glass Fiber | 35.00 | 35.00 | 35.00 | 35.00 | 35.00 | 35.00 |
| Copper Heat Stabilizer A | | | 0.30 | 0.30 | 0.30 | 0.30 |
| DPE | 1.30 | 1.30 | 1.30 | 1.30 | 1.30 | 1.30 |
| Zinc oxide B | | 0.71 | | 0.71 | | 0.71 |
| Black Pigment A | | | 0.60 | 0.60 | 0.60 | 0.60 |
| Black Pigment B | | | 1.00 | 1.00 | 1.00 | 1.00 |
| Kemamide E180 | 0.10 | 0.10 | 0.10 | 0.10 | 0.10 | 0.10 |

| Tensile Properties, Dry-As-Molded | | | | | | |
|---|---|---|---|---|---|---|
| Tensile Strength MPa | 199 | 176 | 200 | 161 | 197 | 158 |
| Elongation [%] | 5.0 | 4.3 | 5.2 | 3.8 | 5.4 | 3.8 |

| Tensile Properties, 500 h at 230 °C | | | | | | |
|---|---|---|---|---|---|---|
| Tensile Strength [MPa] | 138 | 186 | 129 | 160 | 138 | 172 |
| *Tensile Strength Retention* | *70%* | *106%* | *65%* | *99%* | *70%* | *109%* |
| Elongation [%] | 3.3 | 4.5 | 3.4 | 4.0 | 3.4 | 4.3 |
| *Elongation Retention* | 66% | *104* | *64%* | *104* | *63%* | *114%* |

| Tensile Properties, 1000 h at 230 °C | | | | | | |
|---|---|---|---|---|---|---|
| Tensile Strength MPa | 5 | 131 | 8 | 115 | 93 | 181 |
| *Tensile Strength Retention* | *3%* | *74%* | *4%* | *71%* | *47%* | *114%* |
| Elongation [%] | 0.3 | 3.2 | 0.3 | 2.4 | 2.6 | 4.2 |
| *Elongation Retention* | *5%* | *75%* | *5%* | *63%* | *48%* | *111%* |

**Table 7**

| Example | C30 | E17 | C31 | E18 | C32 | E19 | C33 | E20 |
|---|---|---|---|---|---|---|---|---|
| PA 66 | 63.00 | 62.29 | 58.00 | 57.29 | 61.70 | 60.99 | 56.70 | 55.99 |
| PA 6 | | | 5.00 | 5.00 | | | 5.00 | 5.00 |
| Glass Fiber | 35.00 | 35.00 | 35.00 | 35.00 | 35.00 | 35.00 | 35.00 | 35.00 |
| Copper Heat Stabilizer A | 0.30 | 0.30 | 0.30 | 0.30 | 0.30 | 0.30 | 0.30 | 0.30 |
| dipentaerythritol | | | | | 1.30 | 1.30 | 1.30 | 1.30 |
| Zinc oxide B | | 0.71 | | 0.71 | | 0.71 | | 0.71 |
| Black Pigment A | 0.60 | 0.60 | 0.60 | 0.60 | 0.60 | 0.60 | 0.60 | 0.60 |
| Black Pigment B | 1.00 | 1.00 | 1.00 | 1.00 | 1.00 | 1.00 | 1.00 | 1.00 |
| Kemamide E180 | 0.10 | 0.10 | 0.10 | 0.10 | 0.10 | 0.10 | 0.10 | 0.10 |

| Tensile Properties, Dry-As-Molded | | | | | | | | |
|---|---|---|---|---|---|---|---|---|
| Tensile Strength [MPa] | 208 | 185 | 208 | 180 | 218 | 180 | 212 | 176 |
| Elongation [%] | 5.4 | 4.5 | 5.7 | 4.4 | 5.7 | 4.3 | 5.7 | 4.3 |

| Tensile Properties, 500 h at 230 °C | | | | | | | | |
|---|---|---|---|---|---|---|---|---|
| Tensile Strength [MPa] | 41 | 124 | 72 | 143 | 80 | 131 | 107 | 138 |
| *Tensile Strength Retention* | *20%* | *67%* | *35%* | *79%* | *37%* | *73%* | *50%* | *79%* |
| Elongation [%] | 1.2 | 3.4 | 2.2 | 4.3 | 2.5 | 3.2 | 2.9 | 3.4 |
| *Elongation Retention* | *22%* | *76%* | *38%* | *97%* | *44%* | *75%* | *50%* | *80%* |

| Tensile Properties, 1000 h at 230 °C | | | | | | | | |
|---|---|---|---|---|---|---|---|---|
| Tensile Strength [MPa] | 0 | 128 | 24 | 141 | 0 | 137 | 0 | 139 |
| *Tensile Strength Retention* | *0%* | *69%* | *12%* | *78%* | *0%* | *76%* | *0%* | *79%* |
| Elongation [%] | 0.0 | 3.6 | 1.1 | 4.0 | 0.0 | 3.6 | 0.0 | 3.5 |
| *Elongation Retention* | *0%* | *81%* | *20%* | *89%* | *0%* | *84%* | *0%* | *83%* |

## Claims

1. A polyamide composition comprising:
a) 39.9 to 89.9 weight percent of one or more polyamide resins;
b) 10 to 60 weight percent reinforcing agent;
c) 0.2 to 5 weight percent of a zinc compound selected from the group consisting of zinc carbonates, titanates, molybdates, sulfates, phosphates, oxides, borates and halides and mixtures of these;
d) 0.05 to 1 weight percent copper heat stabilizer;
e) 0 to 5 weight percent polyhydric alcohol;
wherein the polyamide resin has a melting point of less than 280 °C, as measured by differential scanning calorimetry at 10 °C/minute scan speed in the first heating scan, and is selected from the group consisting of Group (II) polyamides having a melting point of at least 210 °C selected from the group consisting of poly(tetramethylene hexanediamide), poly(ε-caprolactam), poly(hexamethylene hexanediamide/(ε-caprolactam/), poly(hexamethylene hexanediamide), poly(hexamethylene hexanediamide/hexamethylene decanediamide), poly(hexamethylene hexanediamide/hexamethylene dodecanediamide), poly(hexamethylene hexanediamide/decamethylene decanediamide), poly(hexamethylene decanediamide), poly(hexamethylene dodecanediamide), poly(hexamethylene tetradecanediamide), and poly(tetramethylene hexanediamide/2-methylpentamethylene hexanediamide); and Group (III) polyamides having a melting point of at least 230°C, and comprising
(aa) 20 to 35 mole percent semiaromatic repeat units derived from monomers selected from one or more of the group consisting of:
(i) aromatic dicarboxylic acids having 8 to 20 carbon atoms and aliphatic diamines having 4 to 20 carbon atoms; and
(bb) 65 to 80 mole percent aliphatic repeat units derived from monomers selected from one or more of the group consisting of:
(ii) an aliphatic dicarboxylic acid having 6 to 20 carbon atoms and said aliphatic diamine having 4 to 20 carbon atoms; and
(iii) a lactam and/or aminocarboxylic acid having 4 to 20 carbon atoms; and
combination of these; with the proviso that when zinc borate is the zinc compound or when zinc oxide is the zinc compound and is present at 0.65 weight percent or less, the polyamide composition comprises 0.25 to 5 weight percent polyhydric alcohol; wherein all weight percentages are based on the total weight of the polyamide composition; and
wherein the polyamide composition comprises less than 2 weight percent of a flame retardant and
wherein the flame retardant is selected from the group consisting of organic halogenated flame retardant having 50 to 70 % by weight halogen selected from the group consisting of bromine and chlorine; and organic phosphinate flame retardant.

2. The polyamide composition of claim 1 wherein 0.25 to 5.0 weight percent polyhydric alcohol is present.

3. The polyamide composition of claim 1 wherein the zinc compound is selected from the group of zinc borate, zinc oxide and mixtures of these.

4. The polyamide composition of claim 1 wherein 2 mm test bars prepared from said polyamide composition, exposed at a test temperature of 230 °C for a test period of 1000 hours, in an atmosphere of air, and subsequently tested according to ISO 527-2/1A, have, on average, a retention of tensile strength of at least 66 percent, as compared with that of an unexposed control of identical composition and shape.

5. The polyamide composition of claim 1 wherein 2 mm test bars prepared from said polyamide composition, exposed at a test temperature of 230 °C for a test period of 1000 hours, in an atmosphere of air, and subsequently tested according to ISO 527-2/1A, have, on average, a tensile strength of at least 100 MPa .

6. The polyamide composition of claim 1 wherein the polyamide resin is selected from the group consisting of Group (III) polyamides.

7. The polyamide composition of claim 1 wherein the polyamide resin comprises 1 to 20 weight percent of polycaprolactam.

8. The polyamide composition of claim 1 wherein the polyamide resin is selected from the group consisting of poly(hexamethylene hexanediamide) (PA 66), poly(hexamethylene hexanediamide/hexamethylene terephthalamide) (PA 66/6T), poly(ε-caprolactam) (PA 6), and combinations of these.

9. The polyamide composition of claim 1 wherein the reinforcing agent is selected from the group consisting of circular glass fibers, noncircular glass fibers, carbon fibers, and combinations of these.

10. The polyamide composition of claim 1 wherein the zinc compound is present from 0.2 to 2.0 weight percent.

11. The polyamide composition of claim 1 wherein the copper heat stabilizer is selected from the group consisting of Cu(I) salts, Cu(II) salts, and combinations thereof.

12. The polyamide composition of claim 1 wherein the polyhydric alcohol is selected from the group consisting of pentaerythritol, dipentaerythritol, tripentaerythritol, sorbitol, trimethylolpropane, di(trimethylolpropane), and mixtures of these.

13. A polyamide composition comprising:
a) 39.64 to 89.64 weight percent of one or more Group (IV) polyamide resins having a melting point of greater than 280°C and comprising one or more polyamides selected from the group consisting of Group (IV) polyamides comprising
(cc) 50 to 95 mole percent semiaromatic repeat units derived from monomers selected from one or more of the group consisting of:
(i) aromatic dicarboxylic acids having 8 to 20 carbon atoms and aliphatic diamines having 4 to 20 carbon atoms; and (dd) 5 to 50 mole percent aliphatic repeat units derived from monomers selected from one or more of the group consisting of:
(ii) an aliphatic dicarboxylic acid having 6 to 20 carbon atoms and said aliphatic diamine having 4 to 20 carbon atoms; and
(iii) a lactam and/or aminocarboxylic acid having 4 to 20 carbon atoms;
b) 10 to 60 weight percent reinforcing agent;
c) 0.2 to 5 weight percent of a zinc compound selected from the group consisting of zinc carbonates, titanates, molybdates, sulfates, phosphates, oxides, borates and halides and mixtures of these;
d) 0.01 to 1 weight percent copper heat stabilizer; and
e) 0.25 to 5 weight percent polyhydric alcohol;
wherein all weight percentages are based on the total weight of the polyamide composition; and
wherein the polyamide composition comprises less than 2 weight percent of a flame retardant and
wherein the flame retardant is selected from the group consisting of organic halogenated flame retardant having 50 to 70 % by weight halogen selected from the group consisting of bromine and chlorine; and organic phosphinate flame retardant.

14. The polyamide composition of Claim 1 comprising:
a) 49.25 to 79.25 weight percent of poly(hexamethylene hexanediamide) (PA 66);
b) 20 to 50 weight percent reinforcing agent where said reinforcing agent is glass fiber;
c) 0.2 to 2.0 weight percent zinc compound wherein said zinc compound is zinc borate;
d) 0.05 to 1.0 weight percent copper heat stabilizer;
e) 0.5 to 3 weight percent polyhydric alcohol wherein said polyhydric alcohol is dipentaerythritol.

## Patentansprüche

1. Polyamidzusammensetzung umfassend:
a) 39,9 bis 89,9 Gewichtsprozent eines oder mehrerer Polyamidharze;
b) 10 bis 60 Gewichtsprozent Verstärkungsmittel;
c) 0,2 bis 5 Gewichtsprozent einer Zinkverbindung ausgewählt aus der Gruppe bestehend aus Zinkcarbonaten, -titanaten, -molybdaten, -sulfaten, -phosphaten, - oxiden, -boraten und -halogeniden und Mischungen dieser;
d) 0,05 bis 1 Gewichtsprozent Kupferwärmestabilisator;
e) 0 bis 5 Gewichtsprozent mehrwertigen Alkohol;
wobei das Polyamidharz einen Schmelzpunkt von weniger als 280°C, wie durch Differential-Scanning-Kalorimetrie mit einer Scangeschwindigkeit von 10 °C/Minute im ersten Erwärmungsscan gemessen, aufweist und aus der Gruppe ausgewählt ist bestehend aus Polyamiden der Gruppe (II), die einen Schmelzpunkt von mindestens 210 °C aufweisen, ausgewählt aus der Gruppe bestehend aus Poly(tetramethylenhexandiamid), Poly(ε-caprolactam), Poly(hexamethylenhexandiamid/(ε-Caprolactam), Poly(hexamethylenhexandiamid), Poly(hexamethylenhexandiamid/Hexamethyl endecandiamid), Poly(hexamethylenhexandiamid/Hexamethyl endodecandiamid), Poly(hexamethylenhexandiamid/Decamethyl endecandiamid), Poly(hexamethylendecandiamid), Poly(hexamethylendodecandiamid), Poly(hexamethylentetradecandiamid) und Poly(tetramethylenhexandiamid/2-Methylpentamethylenhexandiamid); und Polyamide der Gruppe (III), die einen Schmelzpunkt von mindestens 230 °C aufweisen und Folgendes umfassen
(aa) 20 bis 35 Molprozent halbaromatische Wiederholungseinheiten, die von Monomeren abgeleitet sind ausgewählt aus einer oder mehreren der Gruppe bestehend aus:
(i) aromatischen Dicarbonsäuren, die 8 bis 20 Kohlenstoffatome aufweisen, und aliphatischen Diaminen, die 4 bis 20 Kohlenstoffatome aufweisen; und
(bb) 65 bis 80 Molprozent aliphatische Wiederholungseinheiten, die von Monomeren abgeleitet sind ausgewählt aus einer oder mehreren der Gruppe bestehend aus:
(ii) einer aliphatischen Dicarbonsäure, die 6 bis 20 Kohlenstoffatome aufweist, und dem aliphatischen Diamin, das 4 bis 20 Kohlenstoffatome aufweist; und
(iii) einem Lactam und/oder einer Aminocarbonsäure, die 4 bis 20 Kohlenstoffatome aufweist; und Kombinationen dieser; mit der Maßgabe, dass, wenn Zinkborat die Zinkverbindung ist oder wenn Zinkoxid die Zinkverbindung ist und in einer Menge von 0,65 Gewichtsprozent oder weniger vorliegt, die Polyamidzusammensetzung 0,25 bis 5 Gewichtsprozent mehrwertigen Alkohol umfasst; wobei alle Gewichtsprozentsätze auf das Gesamtgewicht der Polyamidzusammensetzung bezogen sind; und
wobei die Polyamidzusammensetzung weniger als 2 Gewichtsprozent eines Flammverzögerungsmittels umfasst, und
wobei das Flammverzögerungsmittel aus der Gruppe ausgewählt ist bestehend aus organischem halogeniertem Flammverzögerungsmittel, das 50 bis 70 Gew.-% Halogen aufweist ausgewählt aus der Gruppe bestehend aus Brom und Chlor; und einem organischen Phosphinat-Flammverzögerungsmittel.

2. Polyamidzusammensetzung nach Anspruch 1, wobei 0,25 bis 5,0 Gewichtsprozent mehrwertiger Alkohol vorliegt.

3. Polyamidzusammensetzung nach Anspruch 1, wobei die Zinkverbindung aus der Gruppe ausgewählt ist von Zinkborat, Zinkoxid und Mischungen dieser.

4. Polyamidzusammensetzung nach Anspruch 1, wobei Teststangen von 2 mm, die aus der Polyamidzusammensetzung hergestellt, bei einer Testtemperatur von 230 °C für eine Testzeitspanne von 1000 Stunden in einer Luftatmosphäre ausgesetzt und daraufhin ISO 527-2/1 A entsprechend getestet worden sind, im Durchschnitt eine Zugfestigkeitsretention von mindestens 66 Prozent im Vergleich mit derjenigen einer nicht ausgesetzten Kontrolle identischer Zusammensetzung und Gestalt aufweisen.

5. Polyamidzusammensetzung Anspruch 1, wobei Teststangen von 2 mm, die aus der Polyamidzusammensetzung hergestellt, bei einer Testtemperatur von 230 °C für eine Testzeitspanne von 1000 Stunden in einer Luftatmosphäre ausgesetzt und daraufhin ISO 527-2/1A entsprechend getestet worden sind, im Durchschnitt eine Zugfestigkeit von mindestens 100 MPa aufweisen.

6. Polyamidzusammensetzung nach Anspruch 1, wobei das Polyamidharz aus der Gruppe ausgewählt ist bestehend aus Polyamiden der Gruppe (III).

7. Polyamidzusammensetzung nach Anspruch 1, wobei das Polyamidharz 1 bis 20 Gewichtsprozent Polycaprolactam umfasst.

8. Polyamidzusammensetzung nach Anspruch 1, wobei das Polyamidharz aus der Gruppe ausgewählt ist bestehend aus Poly(hexamethylenhexandiamid) (PA 66), Poly(hexamethylenhexandiamid/Hexamethylenterephthalamid) (PA 66/6T), Poly(ε-Caprolactam) (PA 6) und Kombinationen dieser.

9. Polyamidzusammensetzung nach Anspruch 1, wobei das Verstärkungsmittel aus der Gruppe ausgewählt ist bestehend aus runden Glasfasern, nichtrunden Glasfasern, Kohlefasern und Kombinationen dieser.

10. Polyamidzusammensetzung nach Anspruch 1, wobei die Zinkverbindung in einer Menge von 0,2 bis 2,0 Gewichtsprozent vorliegt.

11. Polyamidzusammensetzung nach Anspruch 1, wobei der Kupferwärmestabilisator aus der Gruppe ausgewählt ist bestehend aus Cu(I)-Salzen, Cu(II)-Salzen und Kombinationen davon.

12. Polyamidzusammensetzung nach Anspruch 1, wobei der mehrwertige Alkohol aus der Gruppe ausgewählt ist bestehend aus Pentaerythrit, Dipentaerythrit, Tripentaerythrit, Sorbit, Trimethylolpropan, Di(trimethylolpropan) und Mischungen dieser.

13. Polyamidzusammensetzung umfassend:
a) 39,64 bis 89,64 Gewichtsprozent eines oder mehrerer Polyamidharze der Gruppe (IV), die einen Schmelzpunkt von mehr als 280°C aufweisen und ein oder mehrere Polyamide umfassen ausgewählt aus der Gruppe bestehend aus Polyamiden der Gruppe (IV) umfassend:
(cc) 50 bis 95 Molprozent halbaromatische Wiederholungseinheiten, die von Monomeren abgeleitet sind ausgewählt aus einer oder mehreren der Gruppe bestehend aus:
(i) aromatischen Dicarbonsäuren, die 8 bis 20 Kohlenstoffatome aufweisen, und aliphatischen Diaminen, die 4 bis 20 Kohlenstoffatome aufweisen;
und (dd) 5 bis 50 Molprozent aliphatischen Wiederholungseinheiten, die von Monomeren abgeleitet sind ausgewählt unter einer oder mehrerer der Gruppe bestehend aus:
(ii) einer aliphatischen Dicarbonsäure, die 6 bis 20 Kohlenstoffatome aufweist, und dem aliphatischen Diamin, das 4 bis 20 Kohlenstoffatome aufweist; und
(iii) einem Lactam und/oder einer Aminocarbonsäure, die 4 bis 20 Kohlenstoffatome aufweist;
b) 10 bis 60 Gewichtsprozent Verstärkungsmittel;
c) 0,2 bis 5 Gewichtsprozent einer Zinkverbindung ausgewählt aus der Gruppe bestehend aus Zinkcarbonaten, -titanaten, -molybdaten, -sulfaten, -phosphaten, - oxiden, -boraten und -halogeniden und Mischungen dieser;
d) 0,01 bis 1 Gewichtsprozent Kupferwärmestabilisator; und
e) 0,25 bis 5 Gewichtsprozent mehrwertigem Alkohol;
wobei alle Gewichtsprozentsätze auf das Gesamtgewicht der Polyamidzusammensetzung bezogen sind; und
wobei die Polyamidzusammensetzung weniger als 2 Gewichtsprozent eines Flammverzögerungsmittels umfasst, und
wobei das Flammverzögerungsmittel aus der Gruppe ausgewählt ist bestehend aus organischem halogeniertem Flammverzögerungsmittel, das 50 bis 70 Gew.-% Halogen aufweist ausgewählt aus der Gruppe bestehend aus Brom und Chlor; und einem organischen Phosphinat-Flammverzögerungsmittel.

14. Polyamidzusammensetzung nach Anspruch 1, umfassend:
a) 49,25 bis 79,25 Gewichtsprozent Poly(hexamethylenhexandiamid) (PA 66);
b) 20 bis 50 Gewichtsprozent Verstärkungsmittel, wobei das Verstärkungsmittel Glasfaser ist;
c) 0,2 bis 2,0 Gewichtsprozent Zinkverbindung, wobei die Zinkverbindung Zinkborat ist;
d) 0,05 bis 1,0 Gewichtsprozent Kupferwärmestabilisator;
e) 0,5 bis 3 Gewichtsprozent mehrwertigen Alkohol, wobei der mehrwertige Alkohol Dipentaerythrit ist.

## Revendications

1. Composition de polyamide comprenant:
a) de 39,9 à 89,9 pour cent en poids d'une ou de plusieurs résines de polyamide;
b) de 10 à 60 pour cent en poids d'un agent de renforcement;
c) de 0,2 à 5 pour cent en poids d'un composé de zinc choisi dans le groupe constitué de carbonates, titanates, molybdates, sulfates, phosphates, oxydes, borates et halogénures de zinc et de mélanges de ceux-ci;
d) de 0,05 à 1 pour cent en poids d'un stabilisant thermique de cuivre;
e) de 0 à 5 pour cent en poids d'un alcool polyhydrique;
dans laquelle la résine de polyamide a un point de fusion de moins de 280°C, tel que mesuré par une calorimétrie différentielle à balayage à une vitesse de balayage de 10°C/minute dans le premier balayage de chauffage et elle est choisie dans le groupe constitué de polyamides du Groupe (II) ayant un point de fusion d'au moins 210°C, choisis dans le groupe constitué de poly(tétraméthylène hexanediamide), poly(ε-caprolactame), poly(hexaméthylène hexanediamide/(ε-caprolactame)), poly(hexaméthylène hexanediamide), poly(hexaméthylène hexanediamide/hexaméthylène décanediamide), poly(hexaméthylène hexanediamide/hexaméthylène dodécanediamide), poly(hexaméthylène hexanediamide/décaméthylène décanediamide), poly(hexaméthylène décanediamide), poly(hexaméthylène dodécanediamide), poly(hexaméthylène tétradécanediamide) et poly(tétraméthylène décanediamide/2-méthylpentaméthylène hexanediamide); et de polyamides du Groupe (III) ayant un point de fusion d'au moins 230°C et comprenant:
(aa) de 20 à 35 pour cent en moles d'unités de répétition semi-aromatiques dérivées de monomères choisis parmi un ou plusieurs du groupe constitué de:
(i) acides dicarboxyliques aromatiques possédant de 8 à 20 atomes de carbone et diamines aliphatiques possédant de 4 à 20 atomes de carbone; et
(bb) de 65 à 80 pour cent en moles d'unités de répétition aliphatiques dérivées de monomères choisis parmi un ou plusieurs du groupe constitué de:
(ii) un acide dicarboxylique aliphatique possédant de 6 à 20 atomes de carbone et ladite diamine aliphatique possédant de 4 à 20 atomes de carbone; et
(iii) un lactame et/ou un acide aminocarboxylique possédant de 4 à 20 atomes de carbone; et combinaisons de ceux-ci; sous réserve que lorsque le borate de zinc est le composé de zinc ou lorsque l'oxyde de zinc est le composé de zinc et qu'il est présent à 0,65 pour cent en poids ou moins, la composition de polyamide comprenne de 0,25 à 5 pour cent en poids d'alcool polyhydrique; dans laquelle tous les pourcentages en poids sont basés sur le poids total de la composition de polyamide; et
dans laquelle la composition de polyamide comprend moins de 2 pour cent en poids d'un retardateur de flamme, et
dans laquelle le retardateur de flamme est choisi dans le groupe constitué d'un retardateur de flamme halogéné organique possédant de 50 à 70% en poids d'un halogène choisi dans le groupe constitué de brome et de chlore; et d'un retardateur de flamme de phosphinate organique.

2. Composition de polyamide selon la revendication 1, dans laquelle de 0,25 à 5,0 pour cent en poids d'alcool polyhydrique est présent.

3. Composition de polyamide selon la revendication 1, dans laquelle le composé de zinc est choisi dans le groupe de borate de zinc, d'oxyde de zinc et de mélanges de ceux-ci.

4. Composition de polyamide selon la revendication 1, dans laquelle des éprouvettes de 2 mm préparées à partir de ladite composition de polyamide, exposées à une température d'essai de 230°C pendant une période d'essai de 1000 heures, dans une atmosphère d'air, et testées par la suite selon la norme ISO 527-2/1A, ont, en moyenne, une rétention de résistance à la traction d'au moins 66 pour cent, lorsqu'elle est comparée à celle d'un témoin non exposé de composition et de forme identiques.

5. Composition de polyamide selon la revendication 1, dans laquelle des éprouvettes de 2 mm préparées à partir de ladite composition de polyamide, exposées à une température d'essai de 230°C pendant une période d'essai de 1000 heures, dans une atmosphère d'air, et testées par la suite selon la norme ISO 527-2/1A, ont, en moyenne, une résistance à la traction d'au moins 100 MPa.

6. Composition de polyamide selon la revendication 1, dans laquelle la résine de polyamide est choisie dans le groupe constitué de polyamides du Groupe (III).

7. Composition de polyamide selon la revendication 1, dans laquelle la résine de polyamide comprend de 1 à 20 pour cent en poids de polycaprolactame.

8. Composition de polyamide selon la revendication 1, dans laquelle la résine de polyamide est choisie dans le groupe constitué de poly(hexaméthylène hexanediamide) (PA 66), poly(hexaméthylène hexanediamide/hexaméthylène téréphtalamide) (PA 66/6T), poly(ε-caprolactame) (PA 6) et de combinaisons de ceux-ci.

9. Composition de polyamide selon la revendication 1, dans laquelle l'agent de renforcement est choisi dans le groupe constitué de fibres de verre circulaires, de fibres de verre non circulaires, de fibres de carbone et de combinaisons de celles-ci.

10. Composition de polyamide selon la revendication 1, dans laquelle le composé de zinc est présent de 0,2 à 2,0 pour cent en poids.

11. Composition de polyamide selon la revendication 1, dans laquelle le stabilisant thermique de cuivre est choisi dans le groupe constitué de sels de Cu(I), de sels de Cu(II) et de combinaisons de ceux-ci.

12. Composition de polyamide selon la revendication 1, dans laquelle l'alcool polyhydrique est choisi dans le groupe constitué de pentaérythritol, dipentaérythritol, tripentaérythritol, sorbitol, triméthylolpropane, di(triméthylolpropane) et de mélanges de ceux-ci.

13. Composition de polyamide comprenant:
a) de 39,64 à 89,64 pour cent en poids d'une ou de plusieurs résines de polyamide du Groupe (IV) ayant un point de fusion de plus de 280°C et comprenant un ou plusieurs polyamides choisis dans le groupe constitué de polyamides du Groupe (IV) comprenant:
(cc) de 50 à 95 pour cent en moles d'unités de répétition semi-aromatiques dérivées de monomères choisis parmi un ou plusieurs du groupe constitué de:
(i) acides dicarboxyliques aromatiques possédant de 8 à 20 atomes de carbone et diamines aliphatiques possédant de 4 à 20 atomes de carbone; et
(dd) de 5 à 50 pour cent en moles d'unités de répétition aliphatiques dérivées de monomères choisis parmi un ou plusieurs du groupe constitué de:
(ii) un acide dicarboxylique aliphatique possédant de 6 à 20 atomes de carbone et ladite diamine aliphatique possédant de 4 à 20 atomes de carbone; et
(iii) un lactame et/ou un acide aminocarboxylique possédant de 4 à 20 atomes de carbone;
b) de 10 à 60 pour cent en poids d'un agent de renforcement;
c) de 0,2 à 5 pour cent en poids d'un composé de zinc choisi dans le groupe constitué de carbonates, titanates, molybdates, sulfates, phosphates, oxydes, borates et halogénures de zinc et de mélanges de ceux-ci;
d) de 0,01 à 1 pour cent en poids d'un stabilisant thermique de cuivre; et
e) de 0,25 à 5 pour cent en poids d'un alcool polyhydrique;
dans laquelle tous les pourcentages en poids sont basés sur le poids total de la composition de polyamide; et
dans laquelle la composition de polyamide comprend moins de 2 pour cent en poids d'un retardateur de flamme, et
dans laquelle le retardateur de flamme est choisi dans le groupe constitué d'un retardateur de flamme halogéné organique possédant de 50 à 70% en poids d'un halogène choisi dans le groupe constitué de brome et de chlore; et d'un retardateur de flamme de phosphinate organique.

14. Composition de polyamide selon la revendication 1 comprenant:
a) de 49,25 à 79,25 pour cent en poids de poly(hexaméthylène hexanediamide) (PA 66);
b) de 20 à 50 pour cent en poids d'un agent de renforcement dans laquelle ledit agent de renforcement est une fibre de verre;
c) de 0,2 à 2,0 pour cent en poids de composé de zinc dans laquelle ledit composé de zinc est le borate de zinc;
d) de 0,05 à 1,0 pour cent en poids de stabilisant thermique de cuivre;
e) de 0,5 à 3 pour cent en poids d'un alcool polyhydrique dans laquelle ledit alcool polyhydrique est le dipentaérythritol.
